(19) Europäisches Patentamt / European Patent Office / Office européen des brevets

(11) **EP 4 425 788 A1**

(12) **EUROPEAN PATENT APPLICATION**
published in accordance with Art. 153(4) EPC

(43) Date of publication:
**04.09.2024 Bulletin 2024/36**

(21) Application number: **21962372.5**

(22) Date of filing: **27.10.2021**

(51) International Patent Classification (IPC):
**H02P 21/22** *(2016.01)*

(52) Cooperative Patent Classification (CPC):
**H02P 21/22**

(86) International application number:
**PCT/JP2021/039617**

(87) International publication number:
**WO 2023/073823 (04.05.2023 Gazette 2023/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **MORI, Tatsuya**
  **Tokyo 100-8310 (JP)**
• **FUJIMOTO, Chiaki**
  **Tokyo 100-8310 (JP)**
• **ISHIKAWA, Kosuke**
  **Tokyo 100-8310 (JP)**

(74) Representative: **Hoffmann Eitle**
**Patent- und Rechtsanwälte PartmbB**
**Arabellastraße 30**
**81925 München (DE)**

(54) **CONTROL DEVICE OF ROTATING MACHINE, AND ELECTRIC POWER STEERING DEVICE**

(57) A rotating machine control device includes: an inverter that applies a voltage to the rotating machine; a current detector that detects a rotating machine current which is a current that flows through the rotating machine, and that is provided in the inverter, and a controller that outputs a voltage command value which is a command value of the voltage to the inverter, based on a control command of the rotating machine, wherein the controller has: a torque current command value generator (31) that calculates a torque current command value based on the control command; a weakened field current command value generator (32 to 34) for calculating a weakened field current command value, and a voltage command value calculator that calculates the voltage command value based on the torque current command value and the weakened field current command value, and the weakened field current command value generator outputs a first weakened field current command value as the weakened field current command value, wherein the first weakened field current command value restricts a modulation rate of the inverter to a first threshold value such that the current detector is capable of detecting at least two phases of the rotating machine current.

FIG. 2

## Description

[Technical Field]

The present disclosure relates to a control device of rotating machine, and an electric power steering device.

[Background Art]

Conventionally, weakened field control is known as a technology to expand an operational range of a rotating machine (range of speed and torque features). Simply put, it is possible to suppress a decrease in torque reduction range that accompanies a rise in speed by ensuring current that flows to the rotating machine in the weakened field control mentioned above.

An example of a conventional weakened field control is disclosed in Patent Document 1. Such a weakened field control begins when a value of a modulation rate command that is less than a maximum modulation rate is adopted, and the weakened field control varies a timing of when the weakened field control begins, and varies a transition timing between an asynchronous PWM (Pulse Width Modulation: Pulse Width Modulation) control by a sinusoidal PWM pattern and a five pulse control. Such a control is conducted to cancel out chattering between the asynchronous PWM control and the five pulse control.

[Citation List]

[Patent Document]

[Patent Document 1] Japanese Patent (Granted) Publication No. 4715576

[Summary of Invention]

[PROBLEM TO BE SOLVED BY THE INVENTION]

In the technology disclosed in Patent Document 1 however, a start time of a weakened field control where it is possible to stably switch between an asynchronous PWM control and a five pulse control is mentioned. However, no mention whatsoever is made of a timing of the weakened field control required for correct current detection in a case where a current detection method in which an inverter included in a shunt resistor is adopted as a current detector in the aforementioned Patent Document 1.

Accordingly, even if the technology disclosed in Patent Document 1 is mounted on a control device of a rotating machine that utilizes an inverter which includes a shunt resistor, it is not possible to correctly detect the current flowing to the rotating machine. As such, since the current that flows to the rotating machine cannot be correctly detected, accuracy of an output torque of the rotating machine worsens, and vibration and or noise become larger due to current detection error.

The present disclosure has been made in order to address the problem above, and an object is to provide a control device of a rotating machine and an electric power steering device capable of improving accuracy of an output torque of the rotating machine and of reducing a vibration and or noise thereof by accurately detecting the current that flows to the rotating machine.

[MEANS TO SOLVE THE PROBLEM]

To solve the problem above, a rotating machine control device according to an embodiment of the present disclosure includes an inverter that applies a voltage to a rotating machine; a current detector that detects a rotating machine current which is a current that flows through the rotating machine, and that is provided in the inverter, and a controller that outputs a voltage command value which is a command value of the voltage to the inverter, based on a control command of the rotating machine, wherein the controller has: a torque current command value generator that calculates a torque current command value based on the control command; a weakened field current command value generator for calculating a weakened field current command value, and a voltage command value calculator that calculates the voltage command value based on the torque current command value and the weakened field current command value, and the weakened field current command value generator outputs a first weakened field current command value as the weakened field current command value, wherein the first weakened field current command value restricts a modulation rate of the inverter to a first threshold value such that the current detector is capable of detecting at least two phases of the rotating machine current.

An electric power steering device according to an embodiment of the present disclosure that includes: a torque detector that detects a steering torque of steering; a rotating machine that generates a steering assist torque to the steering, and the above mentioned rotating machine control device which controls a drive of the rotating machine according to the steering toque detected by the torque detector.

[EFFECTS OF THE INVENTION]

According to the present disclosure, it is possible to correctly detect a current of a two phase rotating machine using a current detector provided in an inverter, so as to improve accuracy of an output torque and to reduce vibration and or noise of the rotating machine.

[Brief Description of Drawings]

[FIG. 1] A block diagram that shows a main part configuration of a control device of a rotating machine according to a first embodiment of the present disclosure.

[FIG. 2] A block diagram that shows an inner composition of a current command value calculator in the first embodiment.

[FIG. 3] A diagram that explains a generation mechanism of a switching signal in the first embodiment.

[FIG. 4] A diagram that shows an example of change in a terminal voltage in the first embodiment.

[FIG. 5] A diagram that shows an example of the switching signal generated in a case where a corrected voltage command changes in the first embodiment.

[FIG. 6] A flowchart that shows processing conducted by a corrected voltage generator in the first embodiment.

[FIG. 7] A diagram that shows an example of a waveform of a voltage command values vu, vv, vw and a corrected voltage command values vu', vv', vw' in the first embodiment.

[FIG. 8] A diagram that shows another example of a waveform of the voltage command values vu, vv, vw and the corrected voltage command values vu', vv', vw' in the first embodiment.

[FIG. 9] A block diagram that shows the main part configuration of the control device of a rotating machine according to a second embodiment of the present disclosure.

[FIG. 10] A block diagram that shows the main part configuration of the control device of a rotating machine according to a third embodiment of the present disclosure.

[FIG. 11] A block diagram that shows an inner composition of a current command value calculator in the third embodiment.

[FIG. 12] A block diagram that shows the main part configuration of the control device of a rotating machine according to a fourth embodiment of the present disclosure.

[FIG. 13] A block diagram that shows an inner composition of a current command value calculator in the fourth embodiment.

[FIG. 14] A diagram that explains a physical meaning of processing that is conducted by a first weakened field current command value calculator upper/lower limit setter in the fourth embodiment.

[FIG. 15] A diagram that explains an operation of the current command value calculator in the fourth embodiment.

[FIG. 16] A block diagram that shows a main part configuration of the control device of a rotating machine according to a fifth embodiment of the present disclosure.

[FIG. 17] A diagram that shows an example of a table used for determining a current in a current detector, in the fifth embodiment.

[FIG. 18] A flowchart that shows processing conducted by the corrected voltage generator in the fifth embodiment.

[FIG. 19] A diagram that shows an example of the waveform of the voltage command values vu, vv, vw and a corrected voltage command values vu', vv', vw' in the fifth embodiment.

[FIG. 20] A diagram shat shows an example of the switching signal output from a controller in the fifth embodiment.

[FIG. 21] A diagram that shows another example of the waveform of the voltage command values vu, vv, vw and the corrected voltage command values vu', vv', vw' in the fifth embodiment.

[FIG. 22] A block diagram that shows the main part configuration of the control device of a rotating machine and an electric power steering device according to a sixth embodiment of the present disclosure.

[FIG. 23] A diagram showing an example of torque-rotational speed characteristics of the rotating machine in the sixth embodiment.

[Description of Embodiments]

Hereinafter, embodiments of a control device of rotating machine and an electric power steering device according to embodiments of the present disclosure are explained with reference to the drawings.

<First Embodiment>

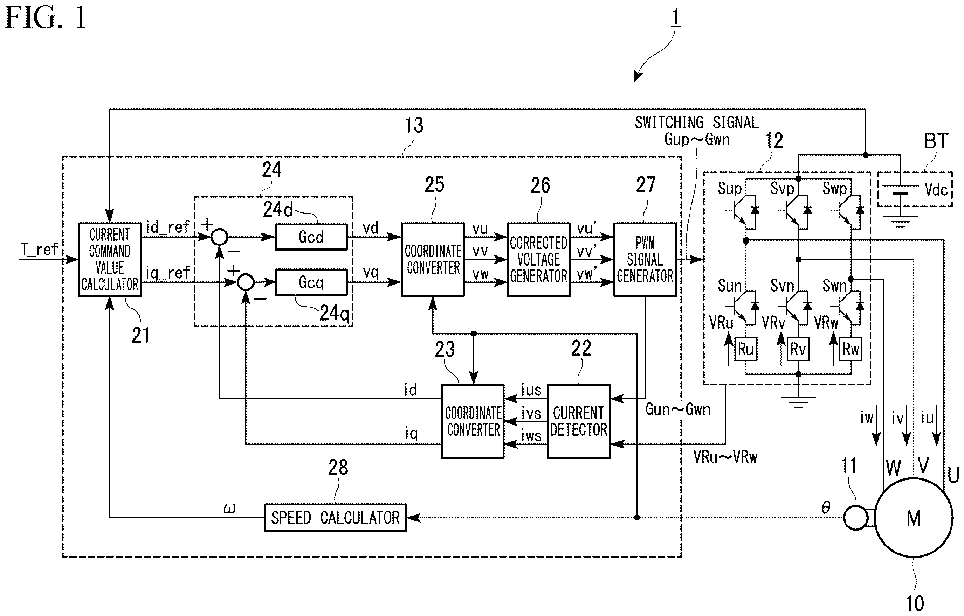

FIG. 1 is a block diagram that shows a main part configuration of a control device of a rotating machine according to a first embodiment of the present disclosure. As shown in FIG. 1, a rotating machine control device 1 according to the present embodiment includes a rotor position detector 11, an inverter 12, and a controller 13. The rotating machine control device 1 controls a rotating machine 10 based on a torque command T_ref as a control command that is input from an outside.

The rotating machine 10, which is an object of control by the rotating machine control device 1, is a three phase alternating current rotating machine having three phase windings of U, V and W. The rotating machine 10, for example, may be any of a permanent magnet synchronous rotating machine, a wound field synchronous rotating machine, an induction rotating machine, or a synchronous reluctance motor

The rotor position detector 11 includes a resolver, an encoder, MR (magnetic resistance), and sensors or the like, and detects a rotor location $\theta$ of the rotating machine 10 using the aforementioned. Although examples where the rotor location $\theta$ of the rotating machine 10 using the rotor position detector 11 are explained in the embodiments of the present disclosure, it is possible to estimate the rotor location $\theta$ of the rotating machine 10 without using the rotor position detector 11. In other words, although information of the rotor location $\theta$ of the

rotating machine 10 is required, including the rotor position detector 11 in the present disclosure is not a must.

The inverter 12 converts direct current power supplied from a direct current power source BT below a control of the controller 13 to alternating current power, and supplies the converted alternating current power to the rotating machine 10. The direct current power source BT includes all or any equipment required for supplying direct current power such as a battery, a DC-DC converter, a diode rectifier, a PWM rectifier and or the like. An output voltage (direct current bus voltage) of the direct current power source BT is "Vdc".

The inverter 12 includes upper arm switching elements Sup, Svp, Swp, lower arm switching elements Sun, Svn, Swn, and shunt resistors Ru, Rv, and Rw (current detectors). The upper arm switching elements Sup, Svp, Swp are connected to a positive pole of the direct current power source BT. Each of the lower arm switching elements Sun, Svn, Swn is connected to each of the upper arm switching elements Sup, Svp, Swp, while being connected to a negative pole of the direct current power source BT via each of the shunt resistors Ru, Rv and Rw.

Here, a U phase series circuit is formed by an upper arm switching element Sup, a lower arm switching element Sun, and a shunt resistor Ru. In the U phase series circuit, a connection point of the upper arm switching element Sup and the lower arm switching element Sun in the said U phase series circuit is connected to a U phase winding of the rotating machine 10.

A V phase series circuit is formed by an upper arm switching element Svp, a lower arm switching element Svn, and a shunt resistor Rv. In the V phase series circuit, a connection point of the upper arm switching element Svp and the lower arm switching element Svn in the said V phase series circuit is connected to a V phase winding of the rotating machine 10.

A W phase series circuit is formed by an upper arm switching element Swp, a lower arm switching element Swn, and a shunt resistor Rw. In the W phase series circuit, a connection point of the upper arm switching element Swp and the lower arm switching element Swn in the said W phase series circuit is connected to a W phase winding of the rotating machine 10.

As the upper arm switching elements Sup, Svp, Swp and the lower arm switching elements Sun, Svn, Swn, it is possible for example to use semiconductor switches such as an IGBT (Insulated Gate Bipolar Transistor), a bipolar transistor, a MOSFET (Metal-Oxide-Semiconductor Field Effect Transistor) or the like.

Switching signals Gup, Gvp, Gwp are each output from the controller 13, and are each input into the upper arm switching elements Sup, Svp and Swp. Switching signals Gun, Gvn, Gwn are each output from the controller 13, and are each input into the lower arm switching elements Sun, Svn and Swn. The upper arm switching elements Sup, Svp, Swp and the lower arm switching elements Sun, Svn, Swn are in an ON state or in an OFF state depending on the switching signals Gup, Gvp, Gwp, Gun, Guv and Gwp output from the controller 13. Hereinafter, there are cases where the notation "switching signals Gup to Gwn" is used when collectively referring to the switching signals Gup, Gvp, Gwp, Gun, Guv and Gwp.

For example, when the switching signal Gup is in the "ON command (=1)", the upper arm switching element Sup is in the ON state. When the switching signal Gup is in the "OFF command (=0)", the upper arm switching element Sup is in the OFF state. The above is similar for the other switching elements (upper arm switching elements Svp, Swp, and lower arm switching elements Svn, Swn). As such, the inverter 12 supplies the alternating current power, which the inverter 12 generates from the direct current power supplied from the direct current power source BT, to the rotating machine 10.

The shunt resistor Ru outputs a terminal voltage VRu (= -Ru x iu) to the controller 13, that is proportional to a current iu (rotating machine current) which flows to the U phase winding of the rotating machine 10. The shunt resistor Rv outputs a terminal voltage VRv (= -Rv x iv) to the controller 13, that is proportional to a current iv (rotating machine current) which flows to the V phase winding of the rotating machine 10. The shunt resistor Rw outputs a terminal voltage VRw (= -Rw x iw) to the controller 13, that is proportional to a current iw (rotating machine current) which flows to the W phase winding of the rotating machine 10.

Terminal voltages VRu, VRv, VRw are values that are obtained by multiplying rotating machine currents iu, iv, iw by resistance values of the shunt resistors Ru, Rv, Rw, and are amounts that are proportional to the currents iu, iv and iw. Accordingly, it can be said that the terminal voltages VRu, VRv, and VRw are values that detect the current (detection of the rotating machine current). The inverter 12 may be integrally formed with the rotating machine 10 (the integrated sum being referred to as a "power pack").

The controller 13 generates the switching signals Gup to Gwn that drive the inverter 12 based on the torque command T_ref, the terminal voltages VRu, VRv, VRw of the shunt resistors Ru, Rv, Rw, and the rotor location θ as inputs. The controller 13 is for example, a PWM controller that is implemented by a discrete time calculator of a microcontroller, or a DSP (Digital Signal Processor) or the like. The controller 13 includes a current command value calculator 21, a current detector 22, a coordinate converter 23, a current controller 24 (voltage command value calculator), a coordinate converter 25 (voltage command value calculator), a corrected voltage generator 26 (voltage command value calculator), a PWM signal generator 27 (voltage command value calculator), and a speed calculator 28.

The current command value calculator 21 calculates current command values id_ref, and iq_ref which are command values of the current (target values) that are conducted to the rotating machine 10 based on the torque command T_ref. For example, when the rotating machine 10 is a permanent magnet synchronous rotating machine, the current command value calculator 21 uses a rotating angular speed $\omega$ of the rotating machine 10 obtained from the speed calculator 28, in addition to the torque command T_ref, the DC bus voltage Vdc, and the rotor location $\theta$ to calculate a torque current command value iq_ref and a weakened field current command value id_ref.

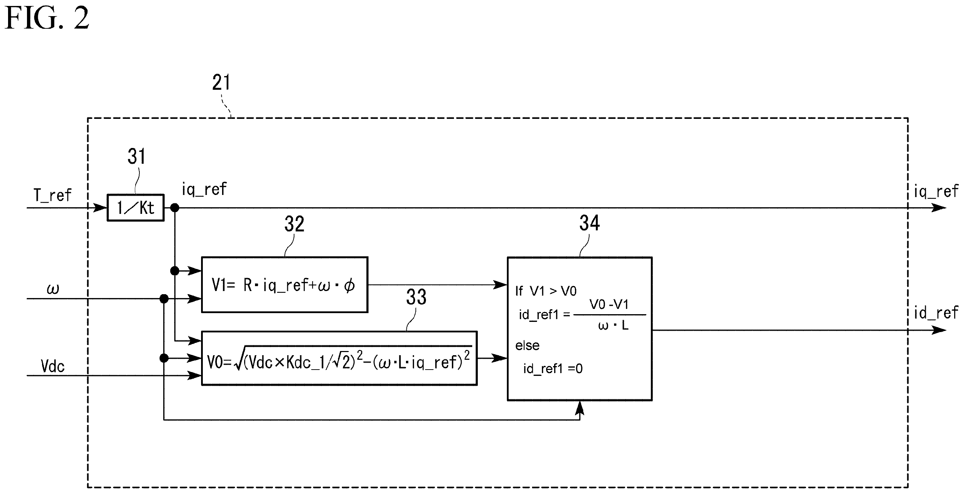

FIG. 2 is a block diagram that shows an inner composition of a current command value calculator in the first embodiment. As shown in FIG. 2, the current command value calculator 21 includes a torque command value generator 31 (torque current command value generator), a weakened field q-axis voltage calculator 32 (weakened field current command value generator), a weakened field target voltage calculator 33 (weakened field current command value generator), and a first weakened field current command value calculator 34 (weakened field current command value generator).

The torque command value generator 31 obtains the torque current command value iq_ref from the control command (the torque command T_ref in this case). For example, in a case where the rotating machine 10 has no saliency or is a small rotating machine, the torque command value generator 31 may obtain the torque current command value iq_ref_by multiplying the torque command T_ref with the inverse (1/Kt) of a torque coefficient Kt of the rotating machine 10. As opposed to the above, in a case where the rotating machine 10 is a rotating machine that has large saliency, the torque command value generator 31 may obtain the torque current command value iq_ref from the torque command T_ref, taking into account a reluctance torque.

The weakened field q-axis voltage calculator 32 obtains a weakened field q-axis voltage V1 based off of the torque current command value iq_ref and the rotating angular speed $\omega$. Here, R and $\varphi$ are a winding resistance, and a flux linkage of the rotating machine 10 respectively. The equation shown within the block that shows the weakened field q-axis voltage calculator 32 in FIG. 2 is equal to "an inductance L and a q-axis current differential value diq/dt of the rotating machine 10 having a multiplication factor removed in the q-axis voltage of the permanent magnet synchronous rotating machine."

The weakened field target voltage calculator 33 uses the torque current command value iq_ref, the rotating angular speed $\omega$, the DC bus voltage Vdc, and a first threshold value Kdc_1 in a modulation rate of the inverter 12 to obtain a weakened field target voltage V0. The first threshold value Kdc_1 is given by equation (1) below.

$$Kdc\_1 = Tmin / Tc \quad \cdots (1)$$

Tc in equation (1) above is a cycle of a carrier triangular waveform. Tmin is a threshold (minimum value) of an ON time of the lower arm switching elements Sun, Svn, and Swn that the rotating machine current is able to correctly detect using the shunt resistors Ru, Rv and Rw. Details of the above are explained later on.

In the equation shown within the block that shows the weakened field target voltage calculator 33 in FIG. 2, the first term of the right hand of the is equal to the "the inverter 12 outputs square of a line voltage effective value Vdc1 (= Vdc x Kdc_1 / $2^{0.5}$)". The second term of the right hand side is "the square of a term having a term of a voltage drop by a d-axis current id at the d-axis of the permanent magnet synchronous rotating machine removed". This equation includes a square root. If a processing load of the controller 13 is to be decreased, a Taylor expansion or a Maclaurin expansion may be used for approximation.

The first weakened field current command value calculator 34 outputs a first weakened field current command value id_ref1 according to the equation shown within the block that shows first weakened field current command value calculator 34 in FIG. 2. Specifically, the first weakened field current command value calculator 34 compares the weakened field q-axis voltage V1 obtained from the weakened field q-axis voltage calculator 32, and the weakened field target voltage V0 obtained from the weakened field target voltage calculator 33. When the relationship is V1 > V0, the first weakened field current command value calculator 34 outputs a value obtained from equation (2) below as the first weakened field current command value id_ref 1.

$$id\_ref1 = (V0 - V1) / (\omega \ x L) \quad \cdots (2)$$

Conversely, when the relationship V1 > V0 is not satisfied, the first weakened field current command value calculator 34 outputs a "0" as the first weakened field current command value id_ref1.

Next, the PWM signal generator 27 shown in FIG. 1 is explained. The PWM signal generator 27 outputs the switching signals Gup to Gwn that have been PWM adjusted based off the corrected voltage command values vu', vv', vw' outputted from the corrected voltage generator 26.

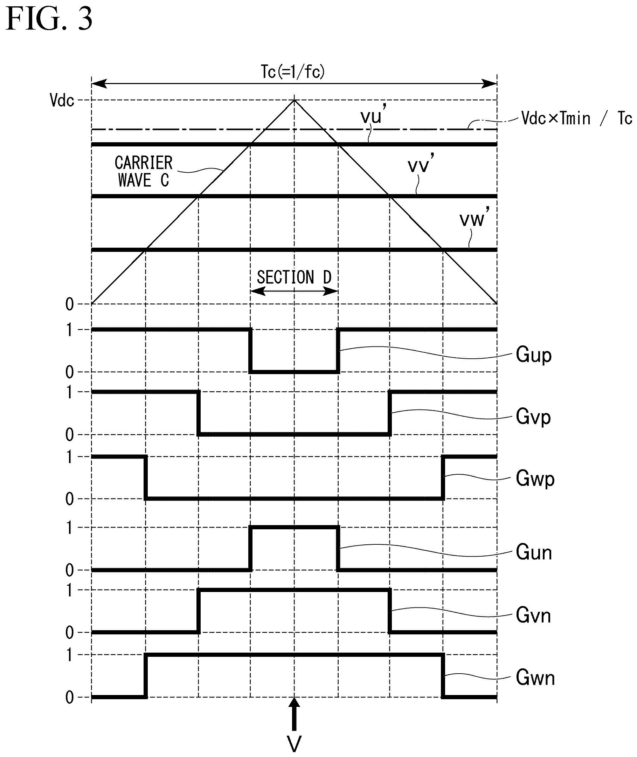

FIG. 3 is a diagram that explains a generation mechanism of the switching signal in the first embodiment. The PWM signal generator 27 generates the switching signals Gup to Gwn by comparing the corrected voltage command values vu', vv', vw', and a carrier triangular waveform (carrier) C of the cycle Tc (frequency fc).

Specifically, if the corrected voltage command value vu' is larger than the carrier triangular waveform C, the PWM signal generator 27 sets the switching signal Gup to ON ("1"), and the switching signal Gun to OFF ("0"). Conversely, if the corrected voltage command value vu' is smaller than the carrier triangular waveform C, the PWM signal generator 27 sets the switching signal Gup to OFF ("0") and the switching signal Gun to ON ("1").

If the corrected voltage command value vv' is larger than the carrier triangular waveform C, the PWM signal generator 27 sets the switching signal Gvp to ON ("1"), and the switching signal Gvn to OFF ("0"). Conversely, if the corrected voltage command value vv' is smaller than the carrier triangular waveform C, the PWM signal generator 27 sets the switching signal Gvp to OFF ("0") and the switching signal Gvn to ON ("1").

If the corrected voltage command value vw' is larger than the carrier triangular waveform C, the PWM signal generator 27 sets the switching signal Gwp to ON ("1"), and the switching signal Gwn to OFF ("0"). Conversely, if the corrected voltage command value vw' is smaller than the carrier triangular waveform C, the PWM signal generator 27 sets the switching signal Gwp to OFF ("0") and the switching signal Gwn to ON ("1").

It is possible to provide a short-circuit prevention time (dead time) in the switching signals Gup to Gwp so that the upper arm switching elements Sup, Svp, Swp and the lower arm switching elements Sun, Svn, Swn of the inverter 12 are not in the ON state at the same time.

A pattern where all elements of the lower arm switching elements Sun, Svn, and Swn are in the ON state in one electrical angle cycle of the rotating machine 10 is included in the switching signals Gup to Gwn. Specifically, as shown by region D in FIG. 3, a pattern where all the elements of the switching signals Gun, Gvn and Gwn are in the ON (1) state is included.

Other than components of the corrected voltage command, components of cycle Tc integral multipliers of the carrier triangular waveform C are included in the voltage (PWM shaped) applied to the rotating machine 10 from the inverter 12. As a result of the above, a current of the components of the cycle Tc integral multipliers are conducted to the rotating machine 10, and noise is generated by the rotating machine 10 due to a value of the cycle Tc.

To prevent such a noise from occurring, when the rotating machine 10 is used as a motor to conduct steering assist of an electric power steering, the cycle Tc of the carrier triangular waveform C is set so as to be less than or equal to 60[$\mu$s]. By setting Tc = 60[$\mu$s], a frequency of noise fc (= 1/Tc) becomes 16.6kHz, which is not a level that is uncomfortable for humans. It is yet more preferable to have the cycle Tc of the carrier triangular waveform C be set to about 50[$\mu$s]. By setting Tc = 50$\mu$s], the frequency of noise fc (= 1/Tc) becomes 20kHz, and humans can barely hear at such frequency. Humans are able to hear frequencies that are in the frequency bandwidth of about 20Hz to 20kHz. In the explanations hereinafter, Tc = 50[$\mu$s] is used.

Next, the current detector 22 shown in FIG. 1 is explained. The current detector 22 outputs detected currents ius, ivs, iws using the terminal voltages VRu, VRv, VRw of the shunt resistors Ru, Rv, Rw, and the switching signals Gup to Gwn that are output from the PWM signal generator 27. Specifically, the current detector 22 obtains the terminal voltages VRu, VRv, VRw of the shunt resistors Ru, Rv, Rw at a timing "V" shown in FIG. 3. Such timing "V" is a timing where the carrier triangular waveform C is at a maximum value (DC bus voltage Vdc).

As shown in FIG. 3, in the timing "V", all of the switching signals Gun, Gvn, Gwn that are input into the lower arm switching elements Sun, Svn, Swn are ON ("1"). Accordingly, it is possible for the current detector 22 to obtain the detected currents ius, ivs, iws by subtracting a -Ru, a -Rv, and a -Rw from each of the terminal voltages VRu, VRv, VRw of the shunt resistors Ru, Rv, and Rw. Hereinafter, a method of obtaining and detecting the detected currents ius, ivs, iws from the terminal voltages VRu, VRv, VRw of the shunt resistors Ru, Rv, Rw is referred to as "three phase detection".

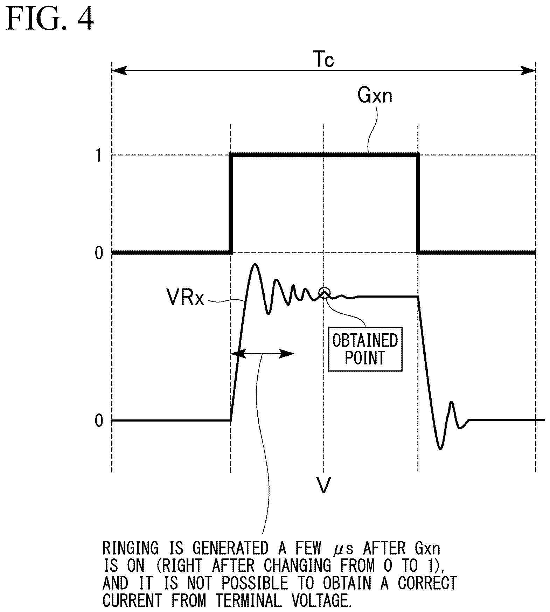

FIG. 4 is a diagram that shows an example of change in a terminal voltage in the first embodiment. As shown in FIG. 4, after a switching signal Gxn changes from "0" to "1", a fluctuation (a fluctuation of only a few [$\mu$s] for example) that results from switching of the inverter 12 and that is referred to as "ringing" occurs in a terminal voltage VRx. The switching signal Gxn shows any one of the switching signals Gun, Gvn, and Gwn. The terminal voltage VRx shows any one of the terminal voltages VRu, VRv, VRw. When the terminal voltages VRu, VRv, VRw that include such ringing are input into the current detector 22, the detected currents ius, ivs, iws output from the current detector 22 have an error generate to currents iu, iv, and iws that actually flow to the rotating machine 10, and so become incorrect.

Here, to obtain accurate detected currents ius, ivs, iws, a corresponding lower arm switching elements Sun, Svn, Swn ON time, needs to be longer than a threshold value Tmin that is set according to a ringing convergence time. To have the lower arm switching elements Sun, Svn, Swn ON time be greater than or equal to the threshold value Tmin, the voltage input into the PWM signal generator 27 needs to be less than or equal to a voltage (Vdc x Tmin/Tc) shown by the dotted-dashed line in FIG. 3. Therefore, to conduct the previously mentioned "three phase detection", voltages of all three phases that are input into the PWM signal generator 27 need to be less than or equal to the voltage (Vdc x Tmin/Tc) shown by the dotted-dashed line in FIG. 3.

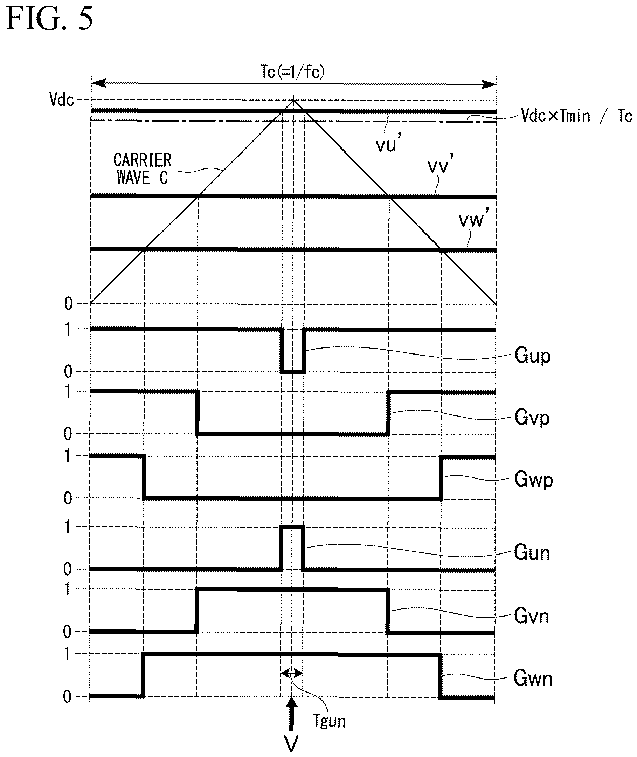

FIG. 5 is a diagram that shows an example of the switching signal generated in a case where the corrected voltage command changes in the first embodiment. As shown in FIG. 5, by a voltage magnitude increasing due to an increase in revolutions of the rotating machine 10, a case exists where the corrected voltage command (the corrected voltage command value vu' in the example shown in FIG. 5) becomes a large value that is close to a maximum value (DC bus voltage Vdc) of carrier triangular waveform C. In such a case, a time lag between a time when the switching signal Gun switches from "0" to "1", and the timing "V" is small, and an effect of ringing exists in the terminal voltage VRu.

As such, when the ON time of any one of the switching signals Gun, Gvn, and Gwn is shorter than the threshold value Tmin, the detected current of the phase relating to the switching signal above may be generated from the other two phases. Hereinafter, such a detection method is referred to as a "two phase detection". For example, as shown in FIG. 5, when the switching signal Gun is shorter than the threshold value Tmin, the current detector 22 may obtain a detected current ius by using an equation ius = - ivs - iws. When the switching signal Gvn is shorter than the threshold value Tmin, the current detector 22 may obtain a detected current ivs by using an equation ivs = - ius - iws. When the switching signal Gwn is less shorter than the threshold value Tmin, the current detector 22 may obtain a detected current iws by using an equation iws = - ius - ivs.

The coordinate converter 23 converts coordinates based on the detected currents ius, ivs, iws detected by the current detector 22, and the rotor location θ detected by the rotor position detector 11, and calculates detected currents id, and iq on both rotational axes (d, q axis).

The current controller 24 calculates voltage command values vd, vq on both rotational axes (d, q axis) based on the current command values id_ref, iq_ref calculated at the current command value calculator 21, and the current values id, and iq calculated at the coordinate converter 23. The current controller 24 includes a d-axis current controller 24d and a q-axis current controller 24q.

The d-axis current controller 24d calculates a voltage command value vd on the d-axis so as to force a d-axis current deviation to become "0", by applying a controller Gcd of a P control and/or PI control or the like to the deviation (d-axis current deviation) of the current command value id_ref, and the detected current id on the d-axis. The q-axis current controller 24q calculates a voltage command value vq on the q-axis so as to force a q-axis current deviation to become "0", by applying a controller Gcq of the P control and/or the PI control or the like to the deviation (q-axis current deviation) of the current command value iq_ref and the detected current iq on the q-axis.

The coordinate converter 25 converts the coordinates of the voltage command values vd, vq on both rotational axes (d, q-axis) based on the rotor location θ detected by the rotor position detector 11, and calculates the voltage command values vu, vv, vw of three phase coordinates.

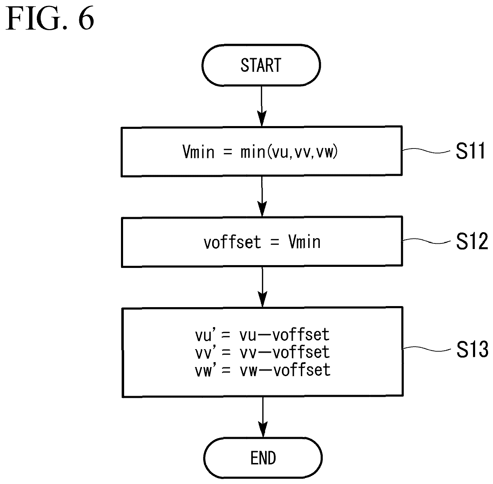

The corrected voltage generator 26 outputs the corrected voltage command values vu', vv', vw' that have an offset voltage voffset added to the voltage command values vu, vv, vw output from the coordinate converter 25. FIG. 6 is a flowchart that shows processing conducted by the corrected voltage generator in the first embodiment.

When processing of the flowchart shown in FIG. 6 starts, first the smallest value out of the voltage command values vu, vv, vw is selected and processing of Vmin is conducted at the corrected voltage generator 26 (step S11). Next, using the DC bus voltage Vdc and the Vmin obtained in step 11, processing of Vmin as the offset voltage voffset at the corrected voltage generator 26 (step S12) is conducted. The offset voltage voffset is subtracted from the voltage command values vu, vv, vw, and a processing that obtains the corrected voltage command values vu', vv', vw' at the corrected voltage generator 26 is conducted (step 13).

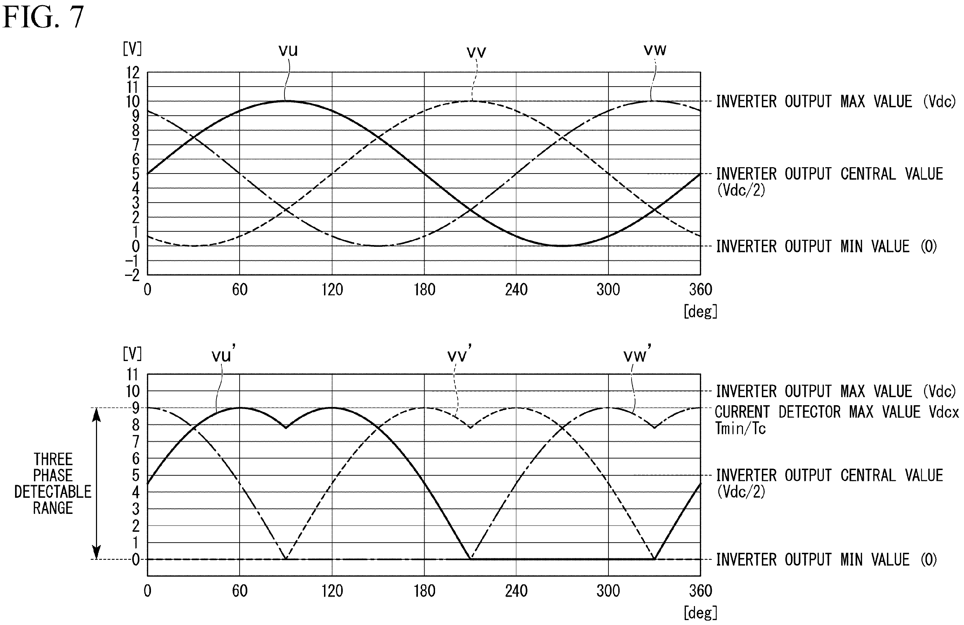

FIG. 7 is a diagram that shows an example of a waveform of the voltage command values vu, vv, vw and the corrected voltage command values vu', vv', and vw' in the first embodiment. The top graph shown in FIG. 7 is a graph that shows a waveform of the voltage command values vu, vv, and vw. The bottom graph shown is a graph that shows a waveform of the corrected voltage command values vu', vv', and vw'. In the graphs shown in FIG. 7, the DC bus voltage Vdc is assumed to be 10V. The range of voltages that may be output by the inverter 12 is 0 (carrier triangular waveform C minimum value) to Vdc (carrier triangular waveform C maximum value). Accordingly, when the DC bus voltage Vdc is equal to 10V, the range of voltages that may be output by the inverter 12 is 0V to 10V, as shown in FIG. 7.

In step S12 shown in FIG. 6, by conducting the offset voltage voffset processing on the Vmin, the smallest value out of the corrected voltage command values vu', vv', vw' always coincides with the lowest value of the inverter output as shown on the bottom graph shown in FIG. 7. At such time, the three phases of the corrected voltage command values vu', vv' and vw' are equally made to offset to the bottom as much as possible in a range where the voltage does not saturate, which means that the ON times of the lower arm switching elements Sun, Svn, and Swn are made to be as large as possible. This is advantageous from the view point of the current detection in an inverter that includes the shunt resistors Ru, Rv and Rw in series with the lower arm switching elements Sun, Svn, and Swn, as in the present embodiment.

The method of calculating the offset voltage voffset is not limited to the above mentioned method. For example, in step S11 of FIG. 6, the smallest value out of the voltage command values vu, vv, vw may be selected and processed as Vmin, and the largest value out of the voltage command values vu, vv, vw may be selected and processed as Vmax. In step S12, processing of setting the voffset to "(Vmax + Vmin) / 2" may be conducted. Accordingly, a method for making voffset = (Vmax + Vmin) / 2 is conventional technology referred to as third harmonic addition or an HIP modulation. The voffset may be set to two phase modulation that always keeps the largest phase of the upper arm switching elements ON.

The graphs shown in FIG. 7 are graphs of cases where an amplitude of an output line voltage of the inverter 12 is set to Kdc_1 x Vdc. At such time, if the threshold value Tmin is set to 5[μs], since the Tc is 50[μs], the first threshold value Kdc_1, as from the previously mentioned equation (1), Kdc_1 = Tmin / Tc = 5[μs] / 50[μs] = 0.9. By referring to the bottom graph shown in FIG. 7, it can be understood that the range of voltage of the corrected voltage command values vu', vv', vw' is set from 0 to 0.9Vdc, and that it is always possible to use "three phase detection".

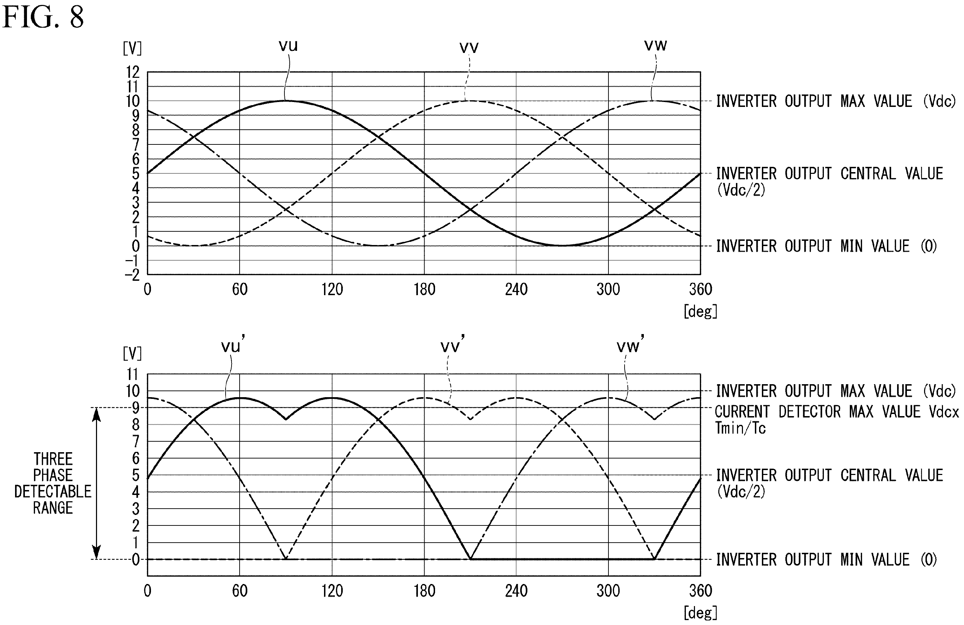

FIG. 8 is a diagram that shows another example of a waveform of the voltage command values vu, vv, vw and the corrected voltage command values vu', vv', vw' in the first embodiment. The top graph shown in FIG. 8 is a graph showing a waveform of the voltage command values vu, vv, vw, and the bottom graph is a waveform of the corrected voltage command values vu', vv', and vw'. The graphs shown in FIG. 8 are graphs of cases where the amplitude of an output line voltage of the inverter 12 is set to be larger than Kdc_1 x Vdc. By referring to the bottom graph shown in FIG. 8, it can be understood that the corrected voltage command values vu', vv', vw' exceed 0.9Vdc, and that it is possible to always use "two phase detection".

As outlined above, the first threshold value Kdc_1 (refer to previously mentioned equation (1)) at the modulation rate of the inverter 12 is regulated in the present embodiment. By transmitting a weakened field current similar to the first weakened field current command value id_ref1 (refer to previously mentioned equation (2)) calculated by the first weakened field current command value calculator 34, the amplitude of the line voltage output from the inverter 12 is restricted to double the Kdc_1 of the DC bus voltage Vdc.

If the modulation rate of the inverter 12 is defined as a "value obtained by subtracting the amplitude of the line voltage output from the inverter 12 by the DC bus voltage Vdc", the modulation rate of the inverter 12 is restricted to the first threshold value Kdc_1. This implies that the range of voltage of the corrected voltage command values vu', vv', and vw' is restricted so that the weakened field current coincides with the three phase detectable range shown in FIG. 7, and that three phase detection is always possible.

As previously mentioned, a three phase detection and a two phase detection exists for current detection of the inverter that includes the shunt resistors Ru, Rv, Rw in series with the lower arm switching elements Sun, Suv, and Swn in the inverter 12 of the present embodiment. When comparing such current detection methods, the three phase detection is better than the two phase detection. This is because, in the three phase detection, when an offset error is present with one of the phases, or when an error of the detected gain by due to an error in a resistance value of a shunt resistor is generated, the effects are small.

Furthermore, as shown in FIG. 8, in the case of the two phase detection, since a value of a vicinity of Vdc as with an instantaneous value of the corrected voltage command value vu' shown in FIG. 5 is taken, then by the above phase (U phase) switching in the vicinity of the timing "V" of current detection, the other two phases (V phase, W phase) are affected, and a problem of a current detection error being generated exists. Accordingly, in the present embodiment, by setting the first weakened field current command value id_ref1 so that it is possible to always conduct the three phase detection, it is possible make the current detection error be small enough. Thus, it is possible to reduce torque ripples, vibrations, and noise resulting from current detection errors.

<Second Embodiment>

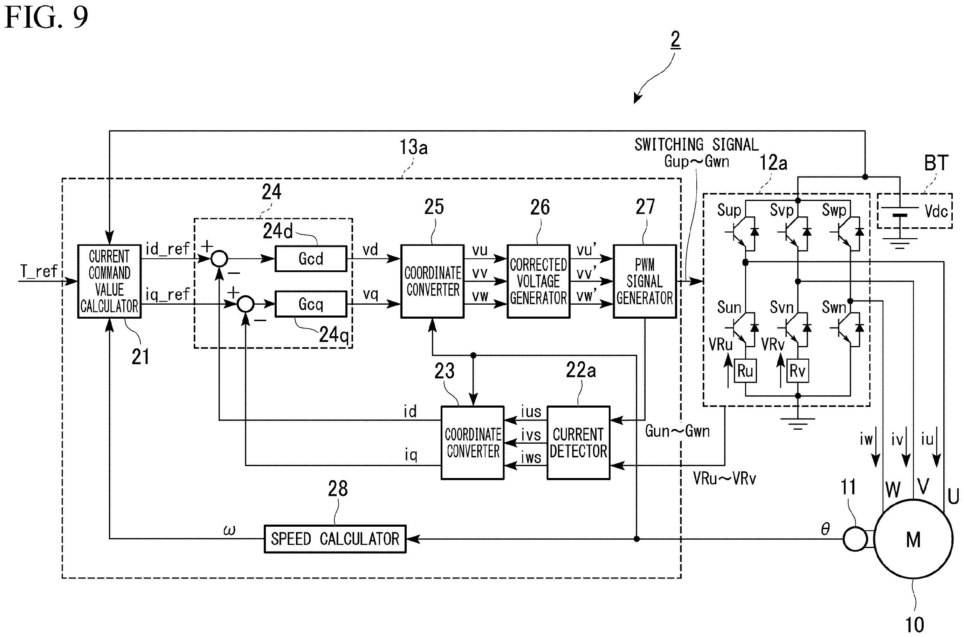

FIG. 9 is a block diagram that shows a main part configuration of a control device of a rotating machine according to a second embodiment of the present disclosure. In FIG. 9, the same configurations as the configurations shown in FIG. 1 have the same reference signs affixed. A rotating machine control device 2 according to the present embodiment is a configuration where the inverter 12 and the controller 13 included in the rotating machine control device 1 shown in FIG. 1 are each substituted with an inverter 12a and a controller 13a.

The inverter 12a is a configuration where the shunt resistor Rw of the inverter 12 shown in FIG. 1 is omitted. In other words, although the inverter 12a is a configuration where the shunt resistors Ru, Rv are provided in series with the lower arm switching elements Sun and Suv, no shunt resistor however is provided with the lower arm switching element Swn. Accordingly, in the present embodiment, the terminal voltages VRu, VRv of the shunt resistors Ru, Rv are input into the controller 13a.

The controller 13a is a configuration where the current detector 22 in the controller 13 shown in FIG. 1 is substituted with a current detector 22a. The current detector 22a outputs the detected currents ius, ivs, iws using the switching signals Gup to Gwn that are output from the shunt resistors Ru, Rv of the terminal voltages VRu, VRv connected in series with the lower arm switching element Sun, Svn of the inverter 12a and the PWM signal generator 27.

The current detector 22a obtains the terminal voltages VRu, VRv of the shunt resistors Ru, Rv at the timing "V" shown in FIG. 3. At such timing, the switching signals Gun, Gvn, Gwn are all ON ("1"). Accordingly, by subtracting values of -Ru and -Rv from each of the terminal voltages VRu and VRv, it is possible to obtain the detected currents ius and ivs. Taking into account that a sum of current (three phase currents) that flow through the rotating machine 10 is 0, the detected current iws is obtained from an equation iws = -ius - ivs.

In the rotating machine control device 2 according to the present embodiment, by having the first weakened field current command value id_ref1 explained in the first embodiment be transmitted, the voltage range of the corrected voltage command values vu', vv', vw' becomes 0 to Vdc x Tmin/Tc, as shown in the bottom graph shown in FIG. 7. In the first embodiment, although it is possible to always conduct three phase detection, since only two shunt resistors, shunt resistors Ru and Rv, exist in the present embodiment, it is possible to always conduct two phase detection.

However, if a conventional weakened field control technology is applied to the configuration of the inverter 12a and the current detector 22a, a problem of an interval where only a single phase of a voltage output shown in FIG. 8 is detected exists. This is because shunt resistance is less than the shunt resistance of a configuration of the first embodiment where the two phase detection interval is generated in the present embodiment.

In the present embodiment, by applying the first weakened field current command value id_ref1 explained in the first embodiment, it is always possible to conduct the two phase detection. By always being able to conduct the two phase detection, it is possible to obtain the remaining single phase of the current by calculation. Thus, it is possible to conduct current control based on current information of the aforementioned three phases at the controller 13a.

<Third Embodiment>

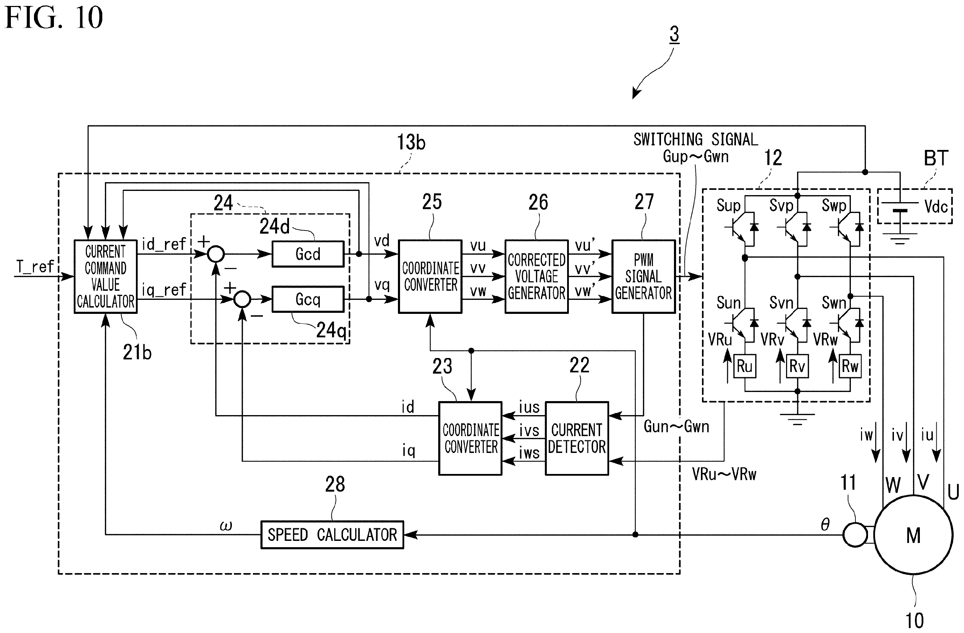

FIG. 10 is a block diagram that shows a main part configuration of a control device of a rotating machine according to a third embodiment of the present disclosure. In FIG. 10, the same configurations as the configurations shown in FIG. 1 have the same reference signs affixed. A rotating machine control device 3 according to the present embodiment is a configuration where the controller 13 included in the rotating machine control device 1 shown in FIG. 1 is substituted with a controller 13b. The controller 13b is a configuration where the current command value calculator 21 in the controller 13 shown in FIG. 1 is substituted with a current command value calculator 21b.

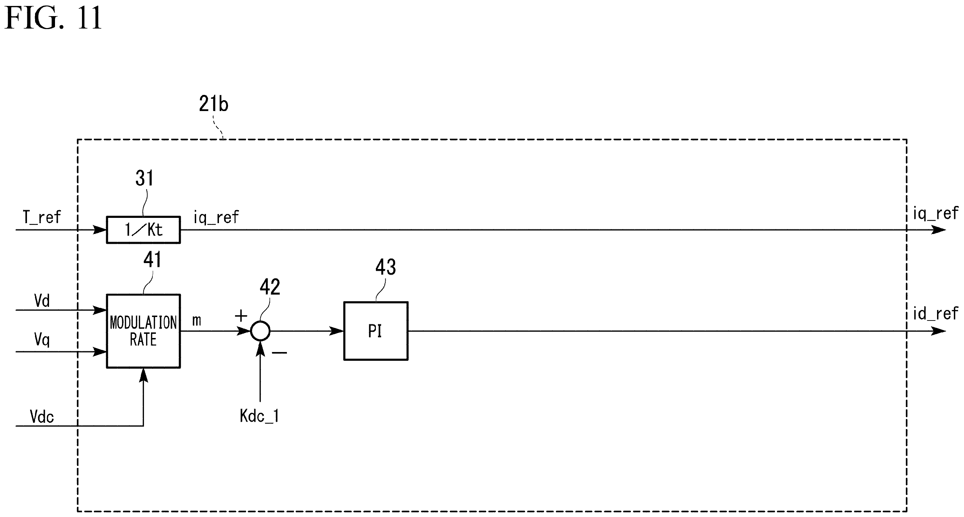

FIG. 11 is a block diagram that shows an inner composition of a current command value calculator in the third embodiment. In FIG. 11, the same configurations as the configurations shown in FIG. 2 have the same reference signs affixed. As shown in FIG. 11, along with the torque command value generator 31, the current command value calculator 21b includes a modulation rate calculator 41 (weakened field current command value generator), a subtractor 42 (weakened field current command value generator), and a PI calculator 43 (weakened field current command value generator).

The modulation rate calculator 41 calculates a modulation rate m shown in equation (3) below based on the voltage command values vd, vq on both rotational axes (d, q axis) and the DC bus voltage Vdc.

$$m = ( vd^2 + vq^2 )^{0.5} / ( Vdc / 2^{0.5} ) \quad \cdots (3)$$

The subtractor 42 calculates a difference between the modulation rate m and the first threshold value Kdc_1 (m - Kdc_1). The PI calculator 43 conducts proportional / integral control so that the obtained difference is 0, and makes that output be the first weakened field current command value id_ref1.

When a result of the conducted proportional / integral control is a positive sign, the sign of the first weakened field current command value id_ref1 is positive. However, even if a positive weakened field current is made to flow, since an operational range of the rotating machine 10 is not expandable, a clip which corrects the difference to 0 when an output of the PI calculator 43 is positive may be provided. A proportional-integral gain of the PI calculator 43 may be set so as to vary in inverse proportion to the rotating angular speed ω of the rotating machine 10

As mentioned above, in the present embodiment, by providing the current command value calculator 21b shown in FIG. 11 as a substitute for the current command value calculator 21 shown in FIG. 1, the difference between the modulation rate m and the first threshold value Kdc_1 is made to be 0. Thus, even if an error between the value of parameters used in the weakened field target voltage calculator 33 shown in FIG. 2 (the winding resistance R of the rotating machine 10, the inductance L, and the flux linkage φ) and the actual value occurs, it is possible to correctly adjust the modulation rate m to the first threshold value Kdc_1.

<Fourth Embodiment>

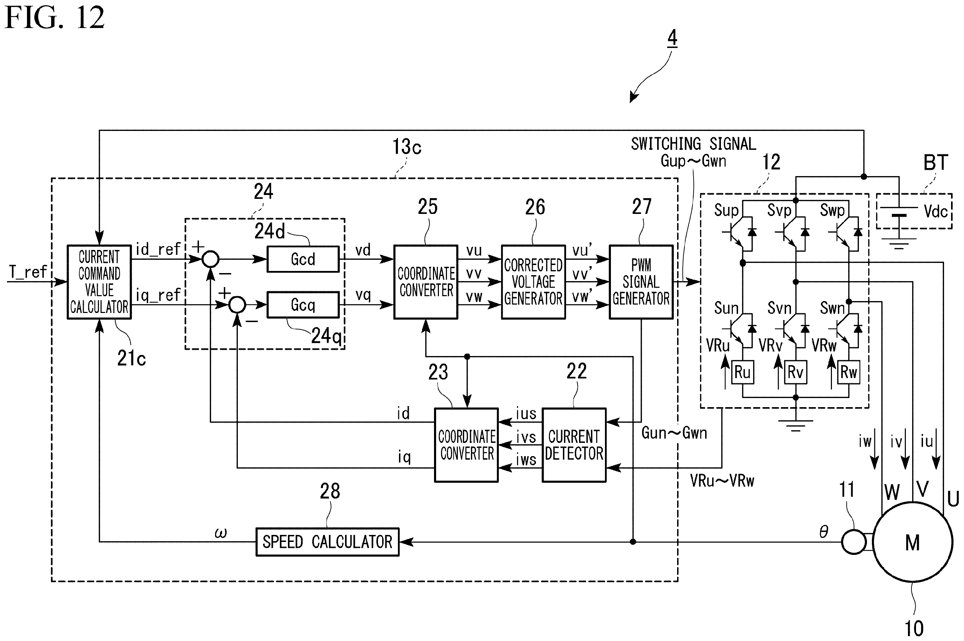

FIG. 12 is a block diagram that shows a main part configuration of a control device of a rotating machine according to a fourth embodiment of the present disclosure. In FIG. 12, the same configurations as the configurations shown in FIG. 1 have the same reference signs affixed. A rotating machine control device 4 according to the present embodiment is a configuration where the controller 13 included in the rotating machine control device 1 shown FIG. 1 is substituted with a controller 13c. The controller 13c is a configuration where the current command value calculator 21 in the controller 13 shown in FIG. 1 is substituted with a current command value calculator 21c.

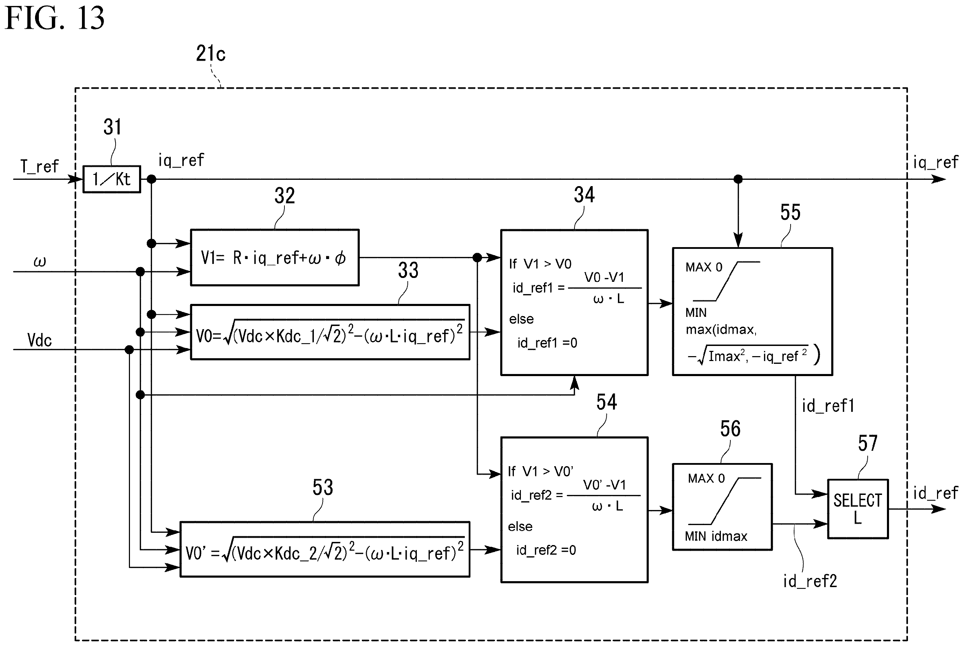

FIG. 13 is a block diagram that shows an inner composition of a current command value calculator in the fourth embodiment. In FIG. 13, the same configurations as the configurations shown in FIG. 2 have the same reference signs affixed. As shown in FIG. 13, the current command value calculator 21c is a configuration where a weakened field target voltage calculator 53 (weakened field current command value generator), a second weakened field current command value calculator 54 (weakened field current command value generator), a first weakened field current command value upper/lower limit setter 55 (weakened field current command value generator), a second weakened field current command value upper/lower limit setter 56 (weakened field current command value generator), and a selector 57 (weakened field current command value generator) are added to the current command value calculator 21 shown in FIG. 2.

The weakened field target voltage calculator 53 obtains a weakened field target voltage V0' by using the torque current command value iq_ref, the rotating angular speed ω, the DC bus voltage Vdc, and a second threshold value Kdc_2 in the modulation rate of the inverter 12. The second threshold value Kdc_2 is given by equation (4) below.

$$Kdc\_2 = Kmax \quad \cdots (4)$$

Kmax in equation (4) above is a range of modulation of a PWM sinusoidal wave, and is usually set to "1". Taking a dead time or the like of the inverter 12 into consideration, Kmax may be set to less than "1". Kmax is a value that is larger than the value of the first threshold value Kdc_1.

The first term of the right hand side of the equation shown within the block that shows the weakened field target voltage calculator 53 in FIG. 13 is equivalent to "a square of the line voltage effective value Vdc1 output by the inverter 12 (= Vdc x Kdc_2 / 2^{0.5})", while the second term on the right hand side is equivalent to "the square of a term having a term of a voltage drop by the d-axis current id at the d-axis of the permanent magnet synchronous rotating machine removed". This equation includes a square root. If a processing load of the controller 13d is to be decreased, a Taylor expansion or a Maclaurin expansion may be used for approximation.

The second weakened field current command value calculator 54 outputs the second weakened field current command value id_ref2 according to the equation shown within the block that shows the second weakened field current command value calculator 54 in FIG. 13. Specifically, the second weakened field current command value calculator 54 compares the weakened field q-axis voltage V1 obtained by weakened field q-axis voltage calculator 32 and the weakened field target voltage V0' obtained by the weakened field target voltage calculator 53. When the relationship is V1 > V0, the second weakened field current command value calculator 54 outputs a value obtained from equation (5) below as the second weakened field current command value id_ref2.

$$id\_ref2 = (V0' - V1) / (\omega \ x \ L) \quad \cdots (5)$$

Conversely, when the relationship V1 > V0' is not satisfied, the second weakened field current command value calculator 54 outputs a "0" as the second weakened field current command value id_ref2.

The first weakened field current command value id_ref1 is a value that restricts the modulation rate of the inverter 12 to the first threshold value Kdc_1 (refer to previously mentioned equation (1)). Conversely, the second weakened field current command value id_ref2 is a value that restricts the modulation rate of the inverter 12 to the second threshold value Kdc_2 (refer to previously mentioned equation (4)).

The first weakened field current command value upper/lower limit setter 55 restricts a maximum of the first weakened field current command value id_ref1 to 0, and restricts a minimum to a larger value of an idmax and - (Imax^2 - iq_ref^2)^{0.5}. The aforementioned Imax is a rated current value of the rotating machine 10 or the inverter 12. The aforementioned idmax is a maximum value of the weakened field current, and is set to a value that avoids permanent demagnetization of the rotating machine 10.

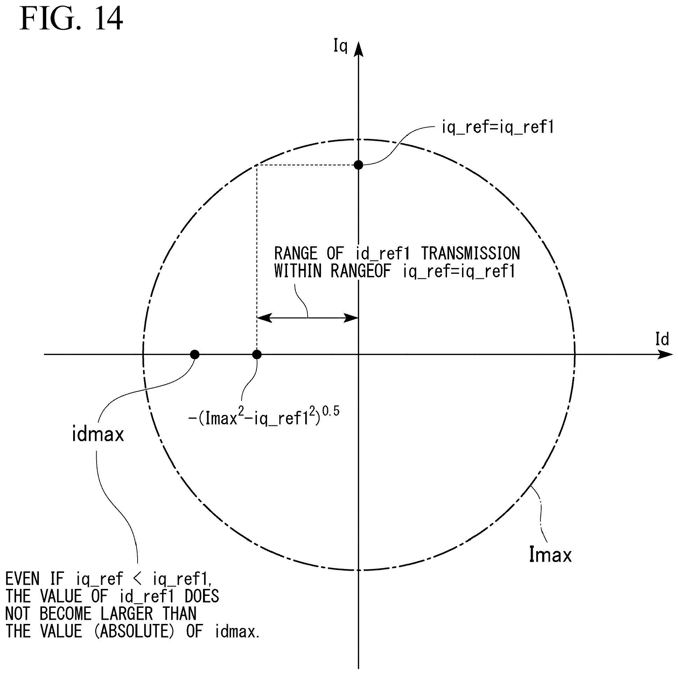

FIG. 14 is a diagram that explains a physical meaning of processing that is conducted by a first weakened field current command value calculator upper/lower limit setter in the fourth embodiment. The vertical axis in FIG. 14 is a q-axis current Iq, and the horizontal axis is a d-axis current Id. The dotted-dashed lined circle shown in FIG. 14 shows the rated current Imax of the rotating machine 10 or the inverter 12. In other words, an inside of the dotted-dashed lined circle shown represents a range where transmission is possible within the rated current Imax of rotating machine 10 or the inverter 12.

When the torque current command value iq_ref = iq_ref1, the transmission range of the first weakened field current command value id_ref1 is in the range of 0 to (Imax^2 - iq_ref1^2)^{0.5}. Therefore, the first weakened field current command value id_ref1 is set (restricted) to a range where a composite vector of the torque current command value iq_ref1 and the id_ref1 does not exceed the rated current Imax of the rotating machine 10 of the inverter 12. However, -(Imax^2 - iq_ref1^2)^{0.5} is a range of the id_ref1 where transmission is possible from the Imax and the iq_ref1, and does not take the aforementioned permanent demagnetization into account. Therefore, the larger value of the -(Imax^2 - iq_ref1^2)^{0.5} and the idmax (the smallest absolute value) is chosen as the minimum value.

The second weakened field current command value upper/lower limit setter 56 restricts a maximum of the second weakened field current command value id_ref2 maximum to 0, and a minimum to idmax. The selector 57, outputs the first weakened field current command value id_ref1 output from the first weakened field current command value upper/lower limit setter 55, or the second weakened field current command value id_ref2 output from the second weakened field current command value upper/lower limit setter 56 as the weakened field current command value id_ref, according to an operation mode of the current command value calculator 21c. As operation modes of the current command value calculator 21c, a first to a fourth mode are shown below.

- First Mode: an operation mode where the weakened field current command value id_ref is transmitted so as to satisfy modulation rate m = Kdc_1. In this operation mode, the first weakened field current command value id_ref1 output from the first weakened field current command value calculator 34 in FIG. 13 is output as the weakened field current command value id_ref without being restricted by the first weakened field current command value upper/lower limit setter 55.

• Second Mode: an operation mode where the $-(Imax^2 - iq\_ref1^2)^{0.5}$ is transmitted so the first weakened field current command value id_ref1. In this operation mode, the first weakened field current command value id_ref1 output from the first weakened field current command value calculator 34 in FIG. 13 is restricted by the first weakened field current command value upper/lower limit setter 55, and is output as id_ref = $-(Imax^2 - iq\_ref1^2)^{0.5}$.

• Third Mode: an operation mode where the weakened field current command value id_ref is transmitted so as to satisfy modulation rate m = Kdc_2. In this operation mode, the second weakened field current command value id_ref2 output from the second weakened field current command value calculator 54 in FIG. 13 is output as the weakened field current command value id_ref without being restricted by the second weakened field current command value upper/lower limit setter 56. The second weakened field current command value id_ref2 output from the second weakened field current command value calculator 54 is smaller (larger absolute value) than the output ($-(Imax^2 - iq\_ref1^2)^{0.5}$) from the second mode.

• Fourth Mode: an operation mode where the maximum value of the weakened field current idmax is output as the first weakened field current command value id_ref1. In such an operation mode, the weakened field current is restricted by the issue of the permanent demagnetization or the like of the rotating machine 10.

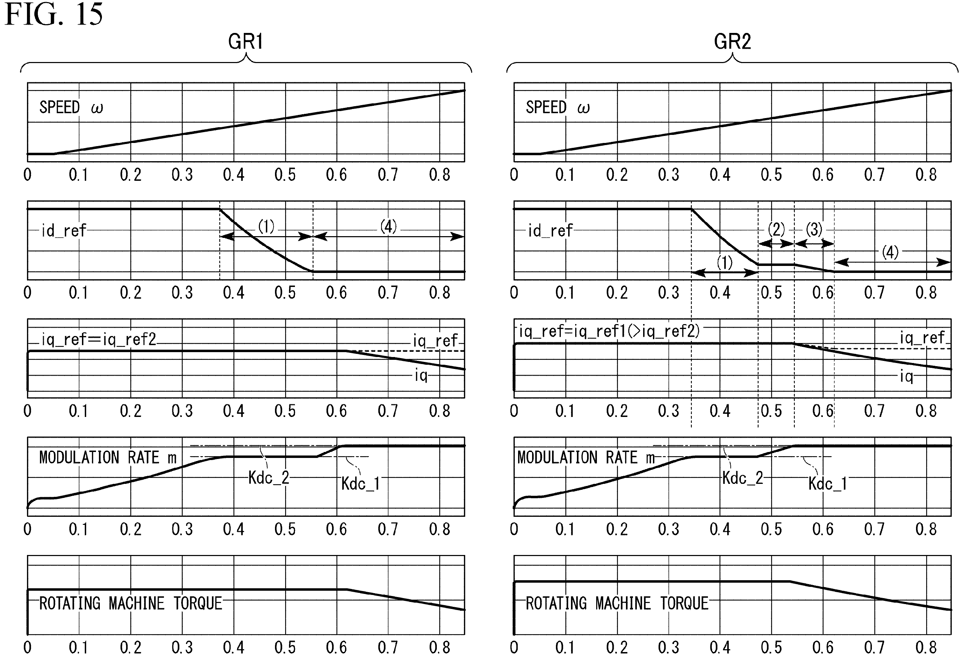

FIG. 15 is a diagram that explains an operation of the current command value calculator in the fourth embodiment. The graph shown on the first row (highest row) in FIG. 15 is a graph that shows a change in the rotating angular speed ω over time of the rotating machine 10. The graph shown on the second row is a graph that shows the change in the weakened field current command value id_ref over time. The graph shown on the third row is a graph that shows the change in torque current command value iq_ref over time. The graph shown on the fourth row is a graph that shows a change in the modulation rate m (= line voltage amplitude of the inverter 12 / DC bus voltage Vdc) over time. The graph shown on the fifth row (lowest row) is a graph that shows a change in the torque of the rotating machine 10 over time.

The graphs shown in FIG. 15 are split into five rows of a group GR1 of graphs that are located on the left and five rows of a group GR2 of graphs that are located on the left, according to a size of the torque current command value iq_ref. The graph group GR1 is a group of graphs of when the size of the torque current command value iq_ref is relatively small. The graph group GR2 is a group of graphs of when size of the torque current command value iq_ref is relatively large.

First, the group of graphs GR1 is explained. The weakened field current command value id_ref (= first weakened field current command value id_ref1) is transmitted (the first mode: (1) shown in the graph of the second row) so as to satisfy m = Kdc_1 when the modulation rate m shown in the fourth graph reaches the first threshold value Kdc_1. When the weakened field current command value id_ref reaches the maximum value idmax of the weakened field current, the weakened field current command value id_ref is held at the idmax (the fourth mode: (4) shown in the graph of the second row).

Next, the graph group GR2 is explained. The weakened field current command value id_ref (= first weakened field current command value id_ref1) is transmitted (the first mode: (1) shown in the graph of the second row) so as to satisfy m = Kdc_1 when the modulation rate m shown in the fourth graph reaches the first threshold value Kdc_1. When the relationship $Imax^2 < id\_ref^2 + iq\_ref^2$ is established, the operation mode of current command value calculator 21c becomes the second mode ((2) shown in the graph of the second row). Thus, the $-(Imax^2 - iq\_ref1^2)^{0.5}$ is transmitted as the weakened field current command value id_ref. At such time, the modulation rate m increases from the first threshold value Kdc_1 to the second threshold value Kdc_2 by an increase in the rotating angular speed ω of the rotating machine 10.

When the modulation rate m = Kdc_2, the second weakened field current command value id_ref2 (the third mode: (3) shown in the graph of the second row) is transmitted as the weakened field current command value id_ref so as to satisfy such increase in the modulation rate m. When the weakened field current command value id_ref reaches the maximum value idmax of the weakened field current, the weakened field current command value id_ref is held at the idmax (the fourth mode: (4) shown in the graph of the second row).

As explained above, first, the first weakened field current command value id_ref1 is transmitted as the weakened field current command value id_ref, and noise of the rotating machine 10 is reduced by holding the modulation rate m as the first threshold value Kdc_1. Next, by restricting the first weakened field current command value id_ref1 according to the rated current Imax of the rotating machine 10 or the inverter 12 and the torque current command value iq_ref, the torque current command value iq_ref is transmitted while the current that is supplied to the rotating machine 10 is suppressed within the rated current Imax.

Next, the first weakened field current command value id_ref1 and the second weakened field current command value id_ref2 which changes the modulation rate m from the second threshold value Kdc_2 (the maximum value that can be PWM modulated) are compared. When the second weakened field current command value id_ref2 becomes smaller (the absolute value becomes larger), the second weakened field current command value id_ref2 is transmitted as the weakened field current command value id_ref.

Therefore, in the present invention, a range in which the first weakened field current command value id_ref1 is transmitted is maximized (the first mode) as much as possible, the torque current command value iq_ref is maintained (the second mode) while maintaining the rated current Imax, and the range in which PWM modulation of the rotating machine 10 due to the transmission of the second weakened field current command value id_ref2 is maintained. Thus, it is possible to balance both quietness and maximum output.

In a predetermined case, the lower limit idmax regulated by the first weakened field current command value upper/lower limit setter 55 and the second weakened field current command value upper/lower limit setter 56, may be set to be larger (smaller absolute value) than a value based off of the previously mentioned permanent demagnetization of the rotating machine 10. In such predetermined case, when the controller 13c of the rotating machine 10 is to conduct transmission restriction based on heat generated by the inverter 12 or the rotating machine 10, if at least one location of a control device of the rotating machine 10 fails, a rotational speed of the rotating machine 10 is less than a value of the threshold. Here, when the rotational speed of the rotating machine 10 is less than the threshold value, the lower limit value idmax may be set to 0.

When the weakened field current is restricted to 0, the current command value calculator 21c may output the weakened field current command value id_ref as 0. In such a case, calculations of the weakened field q-axis voltage calculator 32 shown in FIG. 13, the weakened field target voltage calculator 33, the first weakened field current command value calculator 34, the weakened field target voltage calculator 53, the second weakened field current command value calculator 54, the first weakened field current command value upper/lower limit setter 55, the second weakened field current command value upper/lower limit setter 56 and the selector 57 need not be conducted.

<Fifth Embodiment>

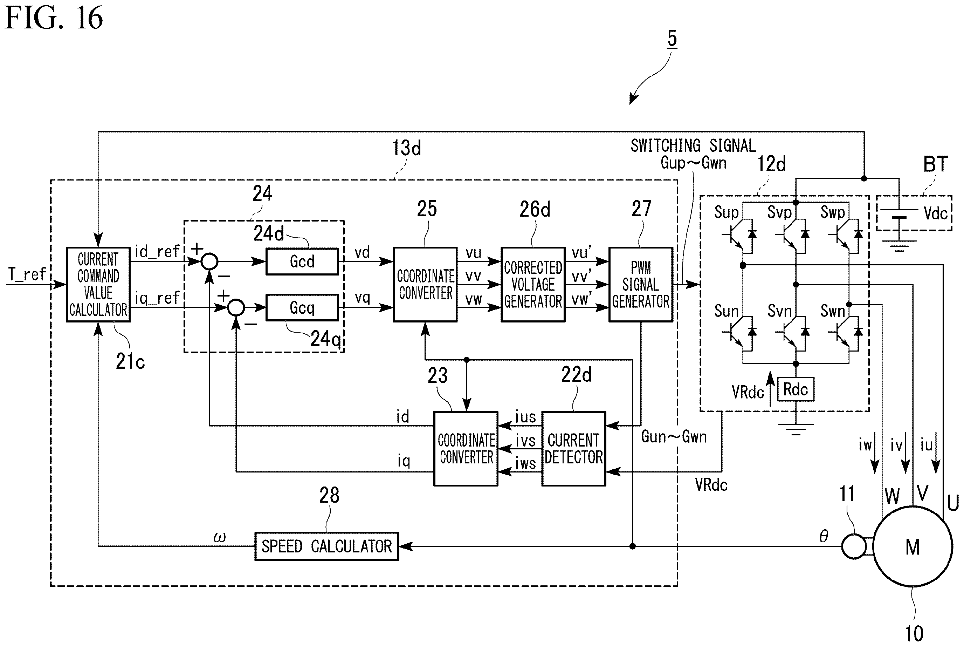

FIG. 16 is a block diagram that shows a main part configuration of a control device of a rotating machine according to a fifth embodiment of the present disclosure. In FIG. 16, the same configurations as the configurations shown in FIG. 12 have the same reference signs affixed. A rotating machine control device 5 according to the present embodiment is a configuration where the inverter 12 and the controller 13c included in the rotating machine control device 4 shown in FIG. 12 are substituted with an inverter 12d and a controller 13d.

The inverter 12d is a configuration where the shunt resistors Ru, Rv, Rw of the inverter 12 shown in FIG. 12 are omitted, and a shunt resistor Rdc (current detector) is provided between a junction point (connection point) of the lower arm switching elements Sun, Svn, Swn and a ground. If a current that flows to the shunt resistor Rdc is made to be Idc, the terminal voltage VRdc of the shunt resistor Rdc is VRdc = Rdc x Idc. Accordingly, in the present embodiment, the terminal voltage VRdc of the shunt resistor Rdc is input into the controller 13d.

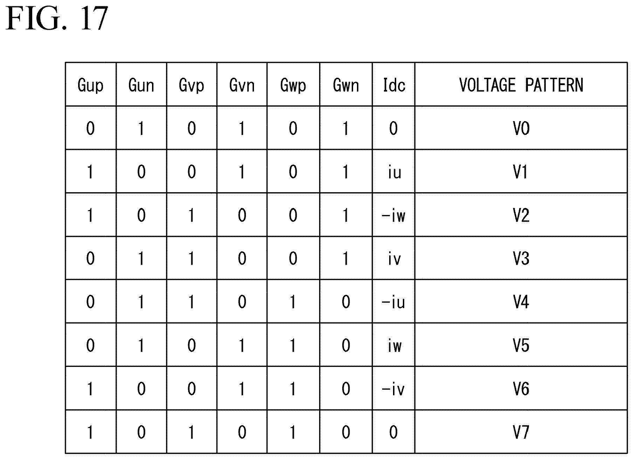

The controller 13d is a configuration where the current detector 22 and the corrected voltage generator 26 that the controller 13c in FIG. 12 includes are each substituted with a current detector 22d and a corrected voltage generator 26d. The current detector 22d obtains the current Idc that flows to the shunt resistor Rdc by subtracting a resistance value of the shunt resistor Rdc from the terminal voltage VRdc of the shunt resistor Rdc output from the inverter 12d. The current detector 22d for example, uses a table shown in FIG. 17 to determine whether the obtained current Idc is 0, or whether the obtained is the current iu which flows to the U phase winding of the rotating machine 10, the current iv which flows to the V phase winding, or the current iw which flows to the W phase winding.

FIG. 17 is a diagram that shows an example of a table used for determining the current in a current detector, in the fifth embodiment. The table shown in FIG. 5 is a table that regulates whether or not the current Idc is 0, or whether the current Idc is any of the currents iu, iv, iw, for each of a combination of switching signals Gup to Gwn output from the PWM signal generator 27. Although an example where a table is used is explained in the above, there is no need to use a table.

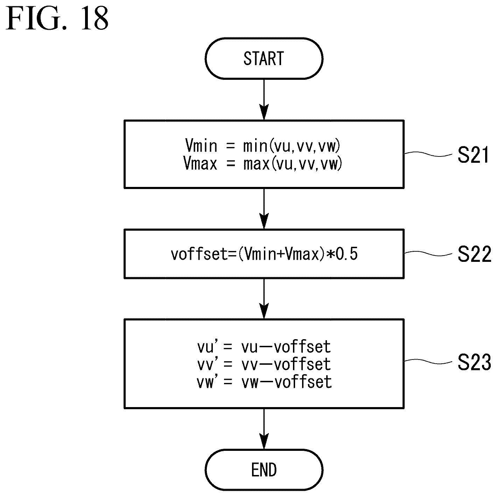

The corrected voltage generator 26 outputs the corrected voltage command values vu', vv', vw' that have an offset voltage voffset added to the voltage command values vu, vv, vw output from the coordinate converter 25. FIG. 18 is a flowchart that shows processing conducted by a corrected voltage generator in the fifth embodiment.

When the processing of the flowchart in FIG. 18 is started, first, a process of choosing the smallest value out of the voltage command values vu, vv, vw as the Vmin, and the largest value out of the voltage command values vu, vv, vw as the Vmax is conducted (step S21) at the corrected voltage generator 26d. Next a processing where an average value of the Vmin and the Vmax obtained in step S21 is processed as an offset voltage voffset is conducted (step S22) at the corrected voltage generator 26d. In other words, processing where the voffset = (Vmin + Vmax) x 0.5 is conducted at the corrected voltage generator 26d. The offset voltage voffset is subtracted from the voltage command values vu, vv, and vw, and the process where the corrected voltage command values vu', vv' and vw' are obtained is conducted (step S23) at the corrected voltage generator 26d.

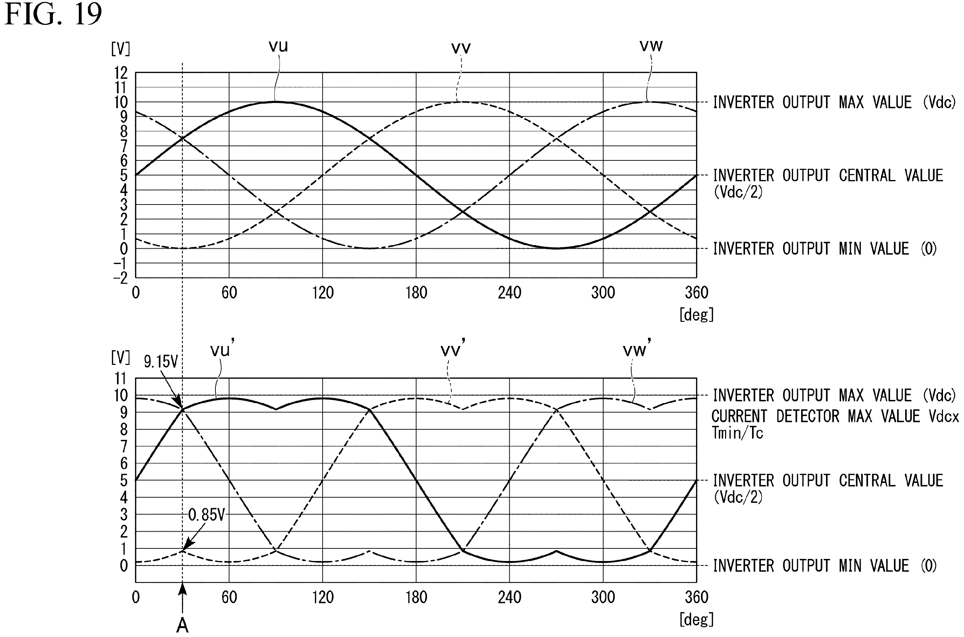

FIG. 19 is a diagram that shows an example of a waveform of the voltage command values vu, vv, vw and the corrected voltage command values vu', vv', vw' in the fifth embodiment. The top graph shown in FIG. 19 is a graph that shows a waveform of the voltage command values vu, vv, vw, and the bottom graph shown is a graph that shows a waveform of the corrected voltage command values vu', vv', and vw'. In the graphs shown in FIG. 19, as with the graphs shown in FIG. 7, the DC bus voltage Vdc is assumed to be 10V. Accordingly, the range of voltages that may be output by the inverter 12d is 0 (carrier triangular waveform C minimum value) to Vdc (carrier triangular waveform C maximum value). Accordingly, when the DC bus voltage Vdc is equal to 10V, the range of voltages that may be output by the inverter 12d is 0V to 10V, as shown in FIG. 19.

In a timing A shown in FIG. 19, referring to the bottom graph, an instantaneous value of the corrected voltage command values vu', and vw' is 9.15[V], and the corrected voltage command value vv' is 0.85[V]. Since the DC bus voltage Vdc = 10[V], a duty of the U phase and the W phase is 91.5%, and a duty of the V phase is 8.5%. What is referred to as "duty" here is a time ratio the upper arm switching elements Sup, Svp, Swp are in an ON state with respect to the cycle Tc of the carrier triangular waveform C.

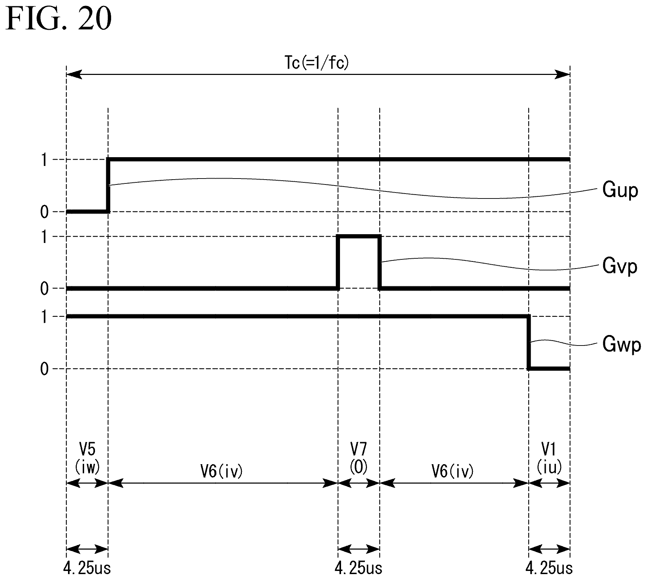

FIG. 20 is a diagram shat shows an example of a switching signal output from a controller in the fifth embodiment. Voltage patterns V5 (iw), V6 (iv), V7 (0), V6 (iv), and V1 (iu) shown in the example in FIG. 20 are output in such order. On the other hand, a requirement for the current of each phase flowing to the shunt resistor Rdc to be detectable from the Idc is that a continuation time of each voltage pattern be longer than the threshold value Tmin (5[$\mu$s]). From FIG. 20, a continuation time of the voltage patterns V5 (iw), and V1 (iu) is 4.25[$\mu$s], which is shorter than the threshold value Tmin, and is therefore not possible to detect the voltage patterns V5 (iw) and V1 (iu). Thus, it is not possible to regenerate the three phase currents at the voltage amplitudes shown in FIG. 19.

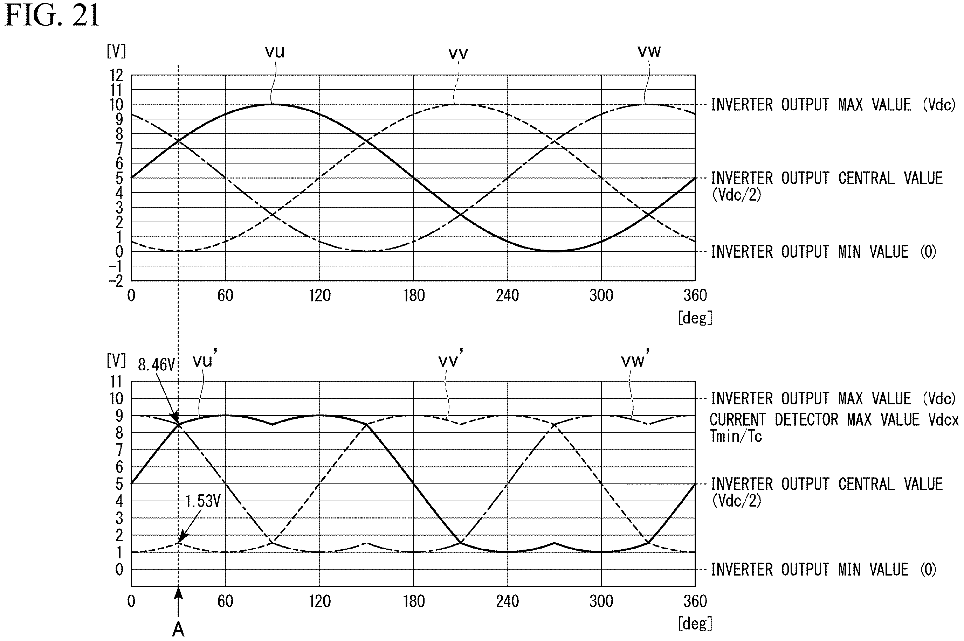

FIG. 21 is a diagram that shows another example of a waveform of the voltage command values vu, vv, vw and the corrected voltage command values vu', vv', vw' in the fifth embodiment. The top graph shown in FIG. 21 is a graph that shows a waveform of the voltage command values vu, vv, vw, and the bottom graph shown is a graph that shows a waveform of the corrected voltage command values vu', vv', and vw'. In the graphs shown in FIG. 21, as with the graphs shown in FIG. 7, the DC bus voltage Vdc is assumed to be 10V. Accordingly, the range of voltages that may be output by the inverter 12d is 0 (carrier triangular waveform C minimum value) to Vdc (carrier triangular waveform C maximum value). Accordingly, when the DC bus voltage Vdc is equal to 10V, the range of voltages that may be output by the inverter 12d is 0V to 10V, as shown in FIG. 19.

In a timing A shown in FIG. 21, referring to the bottom graph, an instantaneous value of the corrected voltage command values vu', and vw' is 8.46[V], and the corrected voltage command value vv' is 1.53[V]. Since the DC bus voltage Vdc = 10[V], a duty of the U phase and the W phase is 86.4%, and a duty of the V phase is 15.3%. Thus, as shown in FIG. 20, expressed as switching signals, the continuation time of the voltage patterns V5 (iw) and V1 (iu) is 7.65[$\mu$m], which is longer than the threshold value Tmin, and it possible to detect the voltage pattern V5 (iw), V1 (iu). Therefore, it is possible to regenerate the three phase currents at the voltage amplitudes shown in FIG. 21.

In the present embodiment, it is possible to set the first threshold value Kdc_1 to a value that outputs a value greater than or equal to the threshold value Tmin, and a value where at least two types of currents from the currents iu, iv, and iw are obtainable. Accordingly, when only one shunt resistor is provided in the inverter 12d, it is possible to realize stable current supply even when the rotating machine 10 is rotating at high speeds.

<Sixth Embodiment>

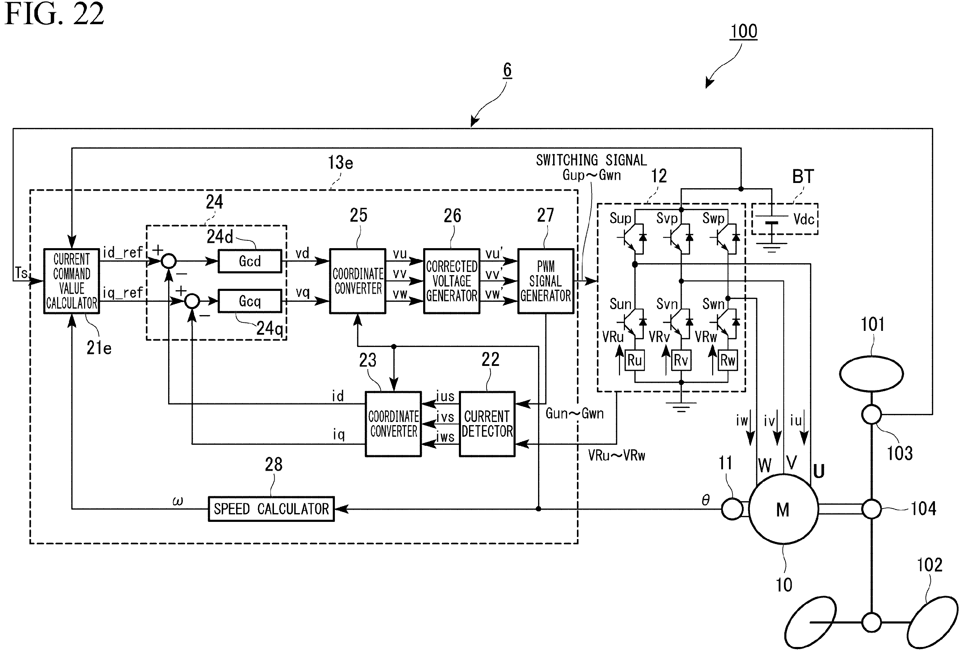

FIG. 22 is a block diagram that shows a main part configuration of the control device of a rotating machine and an electric power steering device according to a sixth embodiment of the present disclosure. In FIG. 22, the same configurations as the configurations shown in FIG. 1 have the same reference signs affixed. As shown in FIG. 22, an electric power steering device 100 includes a torque detector 103, the rotating machine 10, and a rotating machine control device 6, and adds a steering assist force to a steering mechanism of a vehicle or the like.

In FIG. 22, a steering (handling) 101, a front wheel 102 which is driven by the operation of the steering 101 that are operated by a driver as shown as the steering mechanism of a vehicle. As shown in FIG. 22, the rotating machine 10 is connected to the steering mechanism of the vehicle via a gear 104. Accordingly, driving of the rotating machine 10 (steering assist force) is transmitted to the steering mechanism of the vehicle via the gear 104.

The torque detector 103 is disposed in the vicinity of the steering 101, and detects a steering torque Ts of the driver. The rotating machine 10 is mounted on a vehicle steering column or a rack axle, and generates a steering assist torque to the steering 101 while being controlled by the rotating machine control device 6. The rotating machine control device 6 controls the steering assist force added to a steering mechanism of a vehicle by controlling the current being supplied to the rotating machine 10 according to the steering torque Ts detected by the torque detector 103.

The rotating machine control device 6 is a configuration where a controller 13e is substituted for the controller 13 included in the rotating machine control device 1 shown in FIG. 1. The controller 13e is a configuration where the current command value calculator 21 included in the controller 13 shown in FIG. 1 is substituted with a current command value calculator 21e. The current command value calculator 21e calculates the torque current command value iq_ref using a different method than the current command value calculator 21.

The current command value calculator 21e calculates the torque current command value iq_ref based on the steering torque Ts detected by the torque detector 103. For example, the current command value calculator 21e calculates the torque current command value iq_ref from the steering torque Ts using equation (6) below.

$$iq\_ref = ka \times Ts \quad \cdots (6)$$

Although ka in equation (6) above is a constant, it is possible to set a value thereof according to the steering torque Ts or vehicle operational speed. Although an example of determining the "torque current command value iq_ref" by equation (6) is mentioned above, a well-known compensation control may be used in combination with, as seen fit in accordance with steering conditions.

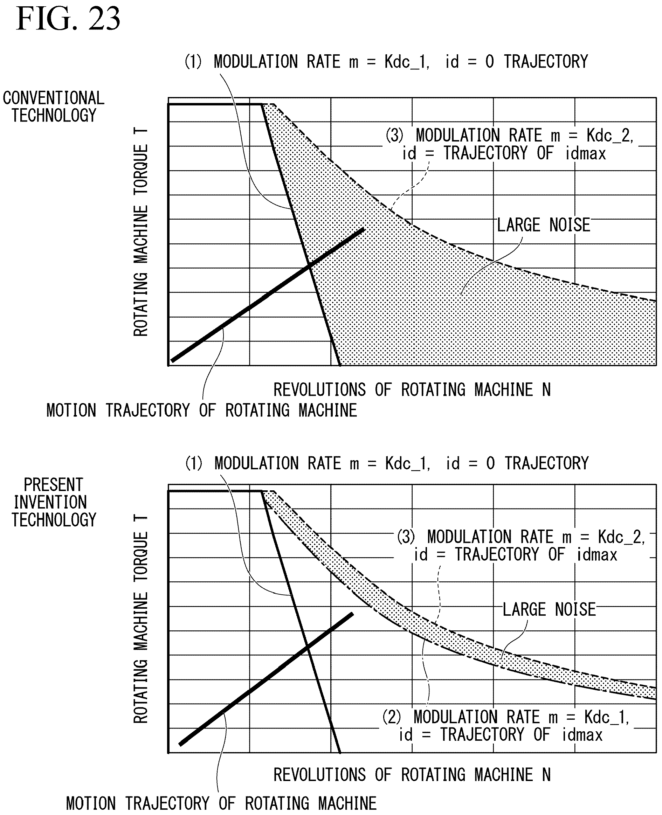

FIG. 23 is a diagram showing an example of torque-rotational speed characteristics of the rotating machine in the sixth embodiment. For the sake of comparison, the top graph shown in FIG. 23 is a graph showing the torque-rotational speed characteristics of a rotating machine of conventional technology, and the bottom graph shown in FIG. 23 is a graph showing the torque-rotational speed characteristics of the rotating machine in the present embodiment.

In FIG. 23, in each of the top and the bottom graphs shown in FIG. 23, a trajectory (1) of the modulation rate m = Kdc_1, id = 0, a trajectory (2) of the modulation rate m = Kdc_1, id = idmax, and a trajectory (3) of the modulation rate m = Kdc_2, id = idmax, id = idmax is shown. In the above, the noise gets larger when the modulation rate m > Kdc_1.

In a case of conventional technology, the range in which noise becomes larger is a region that is surrounded by the trajectory (1) and the trajectory (3). Accordingly, in the case of conventional technology, since a range in which the relationship of the modulation rate m > Kdc_1 which is established is wide, and the time in which noise due to an operation trajectory of the rotating machine 10 is long, there is a possibility of aural discomfort. Accordingly, in the present embodiment, compared to the conventional technology, it is possible to significantly reduce the range in which a relationship of the modulation rate m > Kdc_1 is established. Thus, it is possible to greatly reduce the time interval in which the noise in the operation trajectory of the rotating machine 10 is large, which greatly improves aural discomfort.

As mentioned above, in the present embodiment, the technology being applied in the first embodiment previously mentioned is applied to a steering assist rotating machine of an electric power steering device, and it is possible to maximize a range of transmission of the first weakened field current command value id_ref1. Thus, it is possible to improve quietness of the electric power steering device, and to retain the rated current Imax while obtaining a steering feel which is a remarkable effect that is obtained from retaining the torque current command value iq_ref, all of which is not found in conventional technology.

Although the first to the sixth embodiments of the present disclosure are explained above, the present disclosure is not limited to the embodiments thereof, and so long as the object of the present disclosure is not deviated from, the above mentioned various embodiments may be changed where appropriate. For example, a case where the rotating machine control device 6 in the above mentioned sixth embodiment has the same configuration as the rotating machine control device 1 of the first embodiment is mentioned. However, the aforementioned rotating machine control device 6 in the sixth embodiment may be the same configuration as any of rotating machine control devices 2 to 5 in the second to the fifth embodiments. It is also possible to combine any of the aforementioned first to sixth embodiments as appropriate.

The aforementioned various configurations that include the rotating machine control devices 1 to 6 and the electric power steering device 100 have a computer system therein. A program to realize functions of the various configurations that are included in the aforementioned rotating machine control devices 1 to 6 and the electric power steering device 100 is recorded on a readable recording media, and such program which is recorded on the recording media is loaded onto the computer system, where processing of the rotating machine control devices 1 to 6 and the electric power steering device 100 may be conducted. Here, the "program which is recorded on the recording media is loaded onto the computer system, and processing... conducted" includes installation of such program to the computer system. The "computer system" mentioned here includes an operating system and hardware such as peripheral equipment.

The "computer system" may include a plurality of computer devices connected via a network that includes a telecommunication line of an internet, a WAN, a LAN, a leased line or the like. The "recording media...loaded onto the computer system" is used to refer to a portable medium recording device such as a flexible disk, a magneto-optical disk, a ROM, a CD-ROM or the like, and/or a recording device built into the computer system such as a hard disk or the like. As such, the recording device onto which the programs is recorded may be a non-transient recording device such as a CD-ROM or the like.

A recording device that is provided on an inside or an outside, and that may be accessed from a distribution server for distributing the aforementioned program may be included. The program may be a configuration where the program is divided, and combined at the various configurations included in the rotating machine control devices 1 to 6 and the electric power steering device 100, after being downloaded at timings that differ from one another. The distribution servers that distribute each of the divided program may also differ. The "recording media...loaded onto the computer system" may be a server where the program is transmitted via a network, or a recording media that records the program for a certain period of time such as a volatile memory (RAM) of a built-in computer system which is a client computer. The program may also be a program to realize a part of the aforementioned functions. The program may also be a program that combines with a program already recorded on the computer system to realize the aforementioned functions, in other words, a delta file (delta encoding).

[Reference Sign List]

1~ 6...Rotating Machine Control Devices, 10... Rotating Machine, 12, 12a, 12d...Inverters, 13, 13a~13e...Control Devices, 24...Current Controller, 25... Coordinate Converter, 26, 26d... Corrected Voltage Generator, 27...PWM Signal Generator, 31... Torque Command Value Generator, 32...Weakened Field Q-Axis Voltage Calculator, 33... Weakened Field Target Voltage Calculator, 34... First weakened field current command value calculator, 41...Modulation Rate Calculator, 42...Subtractor, 43...PI Calculator, 53...Weakened Field Target Voltage Calculator, 54...Second weakened field current command value calculator, 55...First weakened field current command value calculator Upper/Lower Limit Setter, 56...Second weakened field current command value calculator Upper/Lower Limit Setter, 57... Selector, 100...Electric Power Steering Device, 101... Steering, 102... Front Wheel, 103... Torque Detector, id_ref...Weakened Field Current Command Value, id_ref1...First Weakened Field Current Command Value, id_ref2... Second Weakened Field Current Command Value, iq_ref...Torque Current Command Value, Kdc_1...First Threshold Value, Kdc_2...Second Threshold Value, M... Modulation Rate, Ru, Rv, Rw...Shunt Resistors, Rdc...Shunt Resistor, Sup, Svp, Swp... Upper Arm Switching Elements, Sun, Svn, Swn... Lower Arm Switching Elements, Vdc...DC Bus Voltage

**Claims**

1. A rotating machine control device comprising:

    an inverter that applies a voltage to a rotating machine;
    a current detector that detects a rotating machine current which is a current that flows through the rotating machine, and that is provided in the inverter, and
    a controller that outputs a voltage command value which is a command value of the voltage to the inverter, based on a control command of the rotating machine, wherein
    the controller has:

        a torque current command value generator that calculates a torque current command value based on the control command;
        a weakened field current command value generator for calculating a weakened field current command value, and
        a voltage command value calculator that calculates the voltage command value based on the torque current command value and the weakened field current command value, and

    the weakened field current command value generator outputs a first weakened field current command value as the weakened field current command value, where the first weakened field current command value restricts a modulation rate of the inverter to a first threshold value such that the current detector is capable of detecting at least two phases of the rotating machine current.

2. The rotating machine control device according to claim 1, wherein the inverter comprises:

    a switching element located in an upper arm and a switching element located in a lower arm, and the current detector is provided in series with the switching element located in the upper arm and/or the switching element located in the lower arm, or provided in series with a DC bus voltage.

3. The rotating machine control device according to claim 2, wherein

    the current detector detects three phases of the rotating machine current, and is provided in series with the switching element located in the lower arm of each phase of the inverter, and the first threshold value is set to the modulation rate of the inverter, such that the current detector is capable of detecting three phases of the rotating machine current.

4. The rotating machine control device according to any one of claims 1 to 3, wherein the weakened field current command value generator calculates the first weakened field current command value based on a rotational speed of the rotating machine and the DC bus voltage of the inverter.

5. The rotating machine control device according to any one of claims 1 to 4, wherein the weakened field current command value generator calculates the first weakened field current command value based on a modulation rate obtained from the voltage command value corresponding to the rotating machine current.

**6.** The rotating machine control device according to any one of claims 1 to 5, wherein
the weakened field current command value generator restricts the first weakened field current command value when overheat protection control is applied to at least one location in the rotating machine control device.

**7.** The rotating machine control device according to any one of claims 1 to 6, wherein
the weakened field current command value generator restricts the first weakened field current command value when a failure is detected in at least one location of the rotating machine control device.

**8.** The rotating machine control device according to any one of claims 1 to 7, wherein
the weakened field current command value generator restricts the first weakened field current command value when a rotational speed of the rotating machine is less than a threshold value.

**9.** The rotating machine control device according to any one of claims 1 to 8, wherein
the controller outputs a second weakened field current command value that restricts the modulation rate of the inverter to a second threshold value that is restricted to a sinusoidal PWM wave modulation range, when the first weakened field current command value reaches a restricted value.

**10.** The rotating machine control device according to claim 9, wherein
the weakened field current command value generator outputs the smallest value out of the restricted first weakened field current command value and the second weakened field current command value as the weakened field current command value, along with restricting the first weakened field current command value, based on the torque current command value, and a rated current of the rotating machine or the inverter.

**11.** The rotating machine control device according to any one of claims 9 or 10, wherein
the weakened field current command value generator calculates the second weakened field current command value based on a rotational speed of the rotating machine and a DC bus voltage of the inverter.

**12.** The rotating machine control device according to any one of claims 9 or 10, wherein
the weakened field current command value generator calculates the second weakened field current command value based on a modulation rate obtained from the voltage command value corresponding to the rotating machine current.

**13.** The rotating machine control device according to any one of claims 9 to 12, wherein
the weakened field current command value generator restricts the second weakened field current command value when overheat protection control is applied to at least one location in the rotating machine control device.

**14.** The rotating machine control device according to any one of claims 9 to 13, wherein
the weakened field current command value generator restricts the second weakened field current command value when a failure is detected in at least one location of the rotating machine control device.

**15.** The rotating machine control device according to any one of claims 9 to 14, wherein
the weakened field current command value generator restricts the second weakened field current command value when a rotational speed of the rotating machine is less than a threshold value.

**16.** An electric power steering device that comprises:

a torque detector that detects a steering torque of steering;
a rotating machine that generates a steering assist torque to the steering, and
the rotating machine control device according to any one of claims 1 to 15 which controls a drive of the rotating machine according to the steering toque detected by the torque detector.

FIG. 1

FIG. 2

EP 4 425 788 A1

FIG. 3

FIG. 4

RINGING IS GENERATED A FEW $\mu$s AFTER Gxn
IS ON (RIGHT AFTER CHANGING FROM 0 TO 1),
AND IT IS NOT POSSIBLE TO OBTAIN A CORRECT
CURRENT FROM TERMINAL VOLTAGE.

FIG. 5

FIG. 6

```
                    ┌──────────────┐
                    │    START     │
                    └──────┬───────┘
                           │
                           ▼
       ┌───────────────────────────────────────┐
       │      Vmin = min(vu,vv,vw)             │─── S11
       └───────────────────┬───────────────────┘
                           │
                           ▼
       ┌───────────────────────────────────────┐
       │          voffset = Vmin               │─── S12
       └───────────────────┬───────────────────┘
                           │
                           ▼
       ┌───────────────────────────────────────┐
       │         vu' = vu—voffset              │
       │         vv' = vv—voffset              │─── S13
       │         vw' = vw—voffset              │
       └───────────────────┬───────────────────┘
                           │
                           ▼
                    ┌──────────────┐
                    │     END      │
                    └──────────────┘
```

FIG. 7

## FIG. 8

EP 4 425 788 A1

FIG. 9

# FIG. 10

# FIG. 11

EP 4 425 788 A1

# FIG. 12

EP 4 425 788 A1

**FIG. 13**

EP 4 425 788 A1

FIG. 14

iq_ref=iq_ref1

RANGE OF id_ref1 TRANSMISSION
WITHIN RANGEOF iq_ref=iq_ref1

Id

$-(\text{Imax}^2 - \text{iq\_ref1}^2)^{0.5}$

idmax

Imax

EVEN IF iq_ref < iq_ref1,
THE VALUE OF id_ref1 DOES
NOT BECOME LARGER THAN
THE VALUE (ABSOLUTE) OF idmax.

FIG. 15

FIG. 16

EP 4 425 788 A1

FIG. 17

| Gup | Gun | Gvp | Gvn | Gwp | Gwn | Idc | VOLTAGE PATTERN |
|-----|-----|-----|-----|-----|-----|-----|-----------------|
| 0 | 1 | 0 | 1 | 0 | 1 | 0 | V0 |
| 1 | 0 | 0 | 1 | 0 | 1 | iu | V1 |
| 1 | 0 | 1 | 0 | 0 | 1 | −iw | V2 |
| 0 | 1 | 1 | 0 | 0 | 1 | iv | V3 |
| 0 | 1 | 1 | 0 | 1 | 0 | −iu | V4 |
| 0 | 1 | 0 | 1 | 1 | 0 | iw | V5 |
| 1 | 0 | 0 | 1 | 1 | 0 | −iv | V6 |
| 1 | 0 | 1 | 0 | 1 | 0 | 0 | V7 |

# FIG. 18

```
            ┌─────────────┐
            │    START    │
            └──────┬──────┘
                   │
                   ▼
   ┌───────────────────────────────┐
   │   Vmin = min(vu,vv,vw)        │ ──── S21
   │   Vmax = max(vu,vv,vw)        │
   └───────────────┬───────────────┘
                   │
                   ▼
   ┌───────────────────────────────┐
   │   voffset=(Vmin+Vmax)*0.5     │ ──── S22
   └───────────────┬───────────────┘
                   │
                   ▼
   ┌───────────────────────────────┐
   │      vu' = vu−voffset         │
   │      vv' = vv−voffset         │ ──── S23
   │      vw' = vw−voffset         │
   └───────────────┬───────────────┘
                   │
                   ▼
            ┌─────────────┐
            │    END      │
            └─────────────┘
```

# FIG. 19

## FIG. 20

# FIG. 21

FIG. 22

EP 4 425 788 A1

# FIG. 23

CONVENTIONAL
TECHNOLOGY

(1) MODULATION RATE m = Kdc_1, id = 0 TRAJECTORY

ROTATING MACHINE TORQUE T

(3) MODULATION RATE m = Kdc_2,
id = TRAJECTORY OF idmax

LARGE NOISE

REVOLUTIONS OF ROTATING MACHINE N

MOTION TRAJECTORY OF ROTATING MACHINE

PRESENT
INVENTION
TECHNOLOGY

(1) MODULATION RATE m = Kdc_1, id = 0 TRAJECTORY

ROTATING MACHINE TORQUE T

(3) MODULATION RATE m = Kdc_2,
id = TRAJECTORY OF idmax

LARGE NOISE

(2) MODULATION RATE m = Kdc_1,
id = TRAJECTORY OF idmax

REVOLUTIONS OF ROTATING MACHINE N

MOTION TRAJECTORY OF ROTATING MACHINE

<div style="text-align:center">**INTERNATIONAL SEARCH REPORT**</div>

| | International application No. |
|---|---|
| | **PCT/JP2021/039617** |

**A.    CLASSIFICATION OF SUBJECT MATTER**

*H02P 21/22*(2016.01)i
FI:    H02P21/22

According to International Patent Classification (IPC) or to both national classification and IPC

**B.    FIELDS SEARCHED**

Minimum documentation searched (classification system followed by classification symbols)

H02P21/22

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2021-141629 A (MITSUBISHI ELECTRIC CORP) 16 September 2021 (2021-09-16) abstract, paragraphs [0012]-[0068], fig. 1-7, in particular, paragraphs [0025], [0036]-[0040], fig. 1, 2 | 1-8, 16 |
| A | | 9-15 |
| Y | JP 2020-78108 A (DENSO CORP) 21 May 2020 (2020-05-21) abstract, paragraphs [0010]-[0019], [0062], fig. 1 | 1-8, 16 |
| A | | 9-15 |
| Y | JP 2008-141868 A (TOYOTA MOTOR CORP) 19 June 2008 (2008-06-19) abstract, paragraphs [0020]-[0091], fig. 1-10, in particular, paragraph [0046], fig. 1, 3, 10 | 6-8, 16 |
| Y | JP 2021-97526 A (MITSUBISHI ELECTRIC CORP) 24 June 2021 (2021-06-24) abstract, paragraphs [0010]-[0073], fig. 1-16 | 8, 16 |
| Y | JP 2020-184855 A (DENSO CORP) 12 November 2020 (2020-11-12) abstract, paragraphs [0008]-[0018], fig. 1-3 | 16 |

☐ Further documents are listed in the continuation of Box C.          ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of mailing of the international search report |
|---|---|
| **27 December 2021** | **11 January 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

PCT/JP2021/039617

| Patent document cited in search report | | | Publication date (day/month/year) | Patent family member(s) | Publication date (day/month/year) |
|---|---|---|---|---|---|
| JP | 2021-141629 | A | 16 September 2021 | CN 113422564 A<br>abstract, paragraphs [0012]-[0068], fig. 1-7, in particular, paragraphs [0025], [0036]-[0040], fig. 1, 2 | |
| JP | 2020-78108 | A | 21 May 2020 | US 2020/0144883 A1<br>abstract, paragraphs [0043]-[0052], [0095], fig. 1 | |
| JP | 2008-141868 | A | 19 June 2008 | (Family: none) | |
| JP | 2021-97526 | A | 24 June 2021 | (Family: none) | |
| JP | 2020-184855 | A | 12 November 2020 | US 2020/0353973 A1<br>abstract, paragraphs [0022]-[0032], fig. 1-3<br>CN 111917354 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 4715576 B